# EUROPÄISCHE PATENTSCHRIFT

(11) **EP 4 043 149 B1**
(45) Veröffentlichungstag und Bekanntmachung des Hinweises auf die Patenterteilung: **02.08.2023**
(21) Anmeldenummer: 21156354.9
(22) Anmeldetag: 10.02.2021
(51) Int. Cl.: B25B 5/14, B25B 5/16

(54) **SPANNBACKE, SPANNEINHEIT, IMPRÄGNIERVORRICHTUNG**
CLAMPING JAW, CLAMPING UNIT, IMPREGNATING DEVICE
MÂCHOIRE DE SERRAGE, UNITÉ DE SERRAGE, DISPOSITIF D'IMPRÉGNATION

(43) Veröffentlichungstag der Anmeldung: 17.08.2022
(73) Patentinhaber: Grob-Werke GmbH & Co. KG, 87719 Mindelheim (DE)
(72) Erfinder: Rauscher, Ralf, 87748 Fellheim (DE); Sackl, Florian, 87648 Aitrang (DE); Pistel, Alexander, 89299 Unterroth (DE)
(74) Vertreter: KASTEL Patentanwälte PartG mbB

(56) Entgegenhaltungen:
- DE-A1-102017 001 939
- DE-A1-102019 100 898

## Beschreibung

Die Erfindung betrifft eine Spannbacke für eine Spanneinheit zur Bearbeitung eines Werkstücks mittels eines Arbeitsfluids unter Richten einer Sperrfluidströmung auf einen von Arbeitsfluid frei zu haltenden Kontaktbereich zwischen Spannbacke und Werkstück. Weiter betrifft die Erfindung eine Spanneinheit zum Einspannen eines Werkstücks mit einer solchen Spannbacke und ein Herstellverfahren für eine solche Spannbacke. Weiter betrifft die Erfindung eine Imprägniervorrichtung zum Imprägnieren von Bauteilen einer elektrischen Maschine in Serienproduktion, eine Imprägnieranordnung mit einer solchen Imprägniervorrichtung und ein Imprägnierverfahren unter Verwendung einer solchen Spannbacke.

Spannbacken werden zum Einspannen von Werkstücken zur Bearbeitung derselben eingesetzt. Bei einigen Bearbeitungsschritten wie Imprägnieren, Beschichten, Lackieren oder dergleichen, sind gezielt Fluide oder Beschichtungen auf bestimmte Bereiche des Werkstücks aufzutragen. Um die Spannbacken danach nicht mühsam reinigen oder gar ersetzen zu müssen, ist es oft erwünscht, den Kontaktbereich, in dem das Werkstück und die Spannbacke in Kontakt sind, frei zu halten.

Eine konkretes vorteilhaftes Einsatzgebiet besonders bevorzugter Ausführungsformen der Erfindung liegt auf dem Gebiet der Herstellung von Maschinenbauteilen von Elektromotoren, wie zum Beispiel Statoren oder Rotoren, oder sonstiger Bauteile der Elektrotechnik, die mit Spulenwindungen versehen sind. Es ist hier oft vorteilhaft, die Spulen in eine Matrix aus nichtleitendem Material einzubetten, um sie in rauen Umgebungsbedingungen zu fixieren und zu schützen, ohne deren elektrische Eigenschaften zu beeinflussen. Hierzu sind zum Beispiel Vorrichtungen, Anordnungen und Verfahren zum Imprägnieren von Statoren bekannt.

Im Bereich der Stator-Fertigung für elektrische Maschinen ist es Stand der Technik, die Wicklung im Stator, welche üblicherweise aus isoliertem Kupferdraht besteht, nach dem Einbringen zusätzlich mit einem Harz oder ähnlichem (Beispiel für Arbeitsfluid) zu isolieren. Dies dient dazu, den Spalt in der Nut mit Harz zu füllen, um eine bessere Wärmeleitfähigkeit zwischen Kupfer und Blechpaket zu erhalten, sowie die Teilentladungsbeständigkeit zu verbessern, sowie auch die Isolationsdicke der Leiter zu erhöhen, um eine höhe Durchschlagsfestigkeit zu erreichen.

Für das Imprägnieren des Stators, d.h. das Füllen der Nuten mit Harz sowie Benetzung der Leiter mit Harz gibt es viele Verfahren, u.a. das Tauchen, das Rolltauchen, und auch das Träufeln.

Das komplette Tauchen hat den Nachteil, dass sämtliche Flächen des Stators sowie des Greifers benetzt sind, und anschließend aufwendig und kostenintensiv Flächen wie Anschraubflächen, Kontaktierungsflächen etc. gereinigt werden müssen.

Aufgrund des Einsatzgebietes des Harzes ist dieses resistent gegen die meisten Lösungsmittel, auch gegen höhere Temperaturen etc. Aufgrund der geforderten sehr guten Benetzungsfähigkeit des Harzes ist es sehr schwierig, eine anhaftende Verschmutzung umliegender Bauteile zu verhindern.

Daher hat sich inzwischen das Träufeln durchgesetzt, bei dem das Harz gezielt auf die Wicklung aufgebracht wird, und somit Verschmutzungen am Innendurchmesser, Außendurchmesser, Verschaltelement etc. vermieden werden können. Hierbei wird das Harz, oft für die Viskosität vorgewärmt, dosiert auf den drehenden Stator aufgebracht, wobei sich das Harz aufgrund der Kapillarwirkung in die Nuten des Stators einzieht.

Zum vorerwähnten Stand der Technik wird insbesondere auf die DE 10 2017 001 939 A1 und die JP 2015 318692 A verweisen, aus denen eine Imprägniervorrichtung, eine Imprägnieranordnung und ein Imprägnierverfahren bekannt sind. Dabei wird ein Stator zum Bilden einer elektrischen Maschine mittels einer Spanneinheit in einer Träufelanlage zum Träufelimprägnieren gehalten.

Aus der US 3 696 780 A ist eine Vorrichtung und ein Verfahren zum Beschichten von Bereichen eines Stators bekannt, wobei ein Spannmechanismus mit Kontaktelementen und Zwischenelementen vorgesehen ist, wobei Druckluft durch Bohrungen in den Zwischenelementen geleitet wird.

Aus der JP 2015 76984 A1 ist es bekannt, ein Blechpaket eines Stators von innen mit einem Spannmechanismus zu spannen, wobei ein Kontaktbereich durch Druckluft von Harz freigehalten wird. Die Druckluft wird durch Kanäle und Bohrungen geleitet, deren Mündungen auf dem Kontaktbereich benachbarte Bereiche gerichtet sind.

Aus der JP 55 97164 A ist es bekannt, Sperrfluid von außen nach innen auf einen von Imprägniermittel frei zu haltenden Bereich eines Bauteils einer elektrischen Maschine zu richten.

Aus der DE 10 2019 100898 A1 ist eine Spannbacke für eine Spanneinheit bekannt, welche geeignet zur Bearbeitung eines Werkstücks mittels eines Arbeitsfluids ist und einen Kontaktbereich zwischen Spannbacke und Werkstück aufweist, wobei die Spanneinheit dazu ausgebildet ist, mit mehreren relativ zueinander beweglichen Spannbacken das Werkstück zur Bearbeitung einzuspannen.

Die Erfindung hat sich zur Aufgabe gestellt, Spannbacken und Spanneinheiten zur Verfügung zu stellen, mit denen ein gezielter Arbeitsfluidauftrag auf eingespannte Werkstücke mit geringerem Nachbearbeitungsaufwand erzielbar ist. Weiter sollen vorteilhafte Verwendungen solcher Spannbacken und Spanneinheiten bei der Herstellung von Bauteilen für elektrische Maschinen vorgeschlagen werden, die eine gezielte Imprägnierung mit einem geringeren Nachbearbeitungsaufwand ermöglichen.

Zum Lösen dieser Aufgabe schafft die Erfindung eine Spannbacke, eine Spanneinheit, eine Imprägniervorrichtung, eine Imprägnieranordnung und ein Imprägnierverfahren gemäß den unabhängigen Ansprüchen. Ein vorteilhaftes Herstellverfahren für eine solche Spannbacke ist in einem weiteren Nebenanspruch angegeben.

Vorteilhafte Ausgestaltungen sind Gegenstand der Unteransprüche.

Die Erfindung schafft gemäß einem Aspekt davon eine Spannbacke für eine Spanneinheit zur Bearbeitung eines Werkstücks mittels eines Arbeitsfluids unter Richten einer Sperrfluidströmung auf einen von Arbeitsfluid frei zu haltenden Kontaktbereich zwischen Spannbacke und Werkstück, wobei die Spanneinheit dazu ausgebildet ist, mit mehreren relativ zueinander beweglichen Spannbacken das Werkstück zur Bearbeitung einzuspannen, wobei die Spannbacke einen Sperrfluideinlass zum Einleiten von Sperrfluid und eine Kontaktfläche zum Kontaktieren des Werkstücks beim Einspannen aufweist, wobei ein die Kontaktfläche und/oder einen der Kontaktfläche benachbarten Kontaktflächennahbereich bildender Fluiddurchlassbereich der Spannbacke eine Schicht oder einen Körper aus einem offenporigen Material mit einer fluidpermeablen offenporigen Struktur aufweist, wobei die Spannbacke dazu ausgebildet ist, das durch den Sperrfluideinlass eingeleitete Sperrfluid durch das offenporige Material hindurch hin auf den von Arbeitsfluid frei zu haltenden Kontaktbereich zu richten, wobei die durchschnittliche Porengröße des offenporigen Materials kleiner als 0,5 mm ist.

Es ist bevorzugt, dass die Spannbacke lediglich im Fluiddurchlassbereich mit der offenporigen Struktur ausgebildet ist und ansonsten geschlossen, versiegelt und/oder massiv und/oder ohne Poren ausgebildet ist.

Bei einer Ausführungsform der Spannbacke ist insbesondere vorgesehen, dass die Spannbacke ganz aus offenporigem Material gebildet ist, das ausserhalb des Spannbackenbereichs bzw. Spannbereichs (mit der Kontaktfläche und gegebenenfalls dem Kontaktflächennahbereich) mit einem separaten Gehäuse umschlossen ist, wobei das Gehäuse ein- oder mehrteilig ausgeführt ist.

Es ist bevorzugt, dass die Spannbacke ganz aus offenporigem Material gebildet ist, das außerhalb des Fluiddurchlassbereichs für Fluid undurchlässig versiegelt ist.

Es ist bevorzugt, dass die Spannbacke im Wesentlichen aus einem homogenen einstückigen Spannbackenkörper besteht, der ganz oder bereichsweise mit der offenporigen Struktur ausgebildet ist.

Es ist bevorzugt, dass die Spannbacke komplett aus Metall gebildet ist.

Es ist bevorzugt, dass keine zusätzlichen Bindemittel, Bindeschichten oder innere Grenzflächen in der Spannbacke vorgesehen sind.

Es ist bevorzugt, dass das offenporige Material ein Metallmaterial ist.

Es ist bevorzugt, dass das offenporige Material Poren mit einer durchschnittlichen Porengröße kleiner 250 µm aufweist.

Es ist bevorzugt, dass das offenporige Material Durchgangskanäle mit einem durchschnittlichen Durchmesser kleiner 0,5 mm, vorzugsweise kleiner 250 µm, aufweist.

Die Poren und/oder Kanäle sind vorzugsweise über das offenporige Material gleichmäßig verteilt, so dass an der gesamten Oberfläche des offenporigen Materials eine gleichmäßige Fluiddurchlässigkeit gegeben ist.

Es ist bevorzugt, dass das offenporige Material durch 3D-Druck hergestellt ist.

Es ist bevorzugt, dass das offenporige Material eine offenporige Waben- oder Stützstruktur aufweist.

Gemäß einem weiteren Aspekt schafft die Erfindung eine Spanneinheit zum Einspannen eines Werkstücks zwecks Bearbeitung des Werkstücks mittels eines Arbeitsfluids unter Richten einer Sperrfluidströmung auf einen von Arbeitsfluid frei zu haltenden Kontaktbereich zwischen Spanneinheit und Werkstück, umfassend mehrere der Spannbacken nach einer der voranstehenden Ausgestaltungen und einen Spannbackenbewegungsmechanismus zur Relativbewegung der Spannbacken.

Gemäß einem weiteren Aspekt schafft die Erfindung eine Imprägniervorrichtung zum Imprägnieren von Statoren von elektrischen Maschinen in Serienproduktion unter Richten einer Sperrfluidströmung auf einen von Imprägnier-Harz frei zu haltenden Kontaktbereich, in dem der Stator zum Einspannen kontaktiert wird, umfassend eine Spanneinheit mit wenigstens einer Spannbacke oder eine Spanneinheit nach einer der voranstehenden Ausgestaltungen sowie eine Sperrfluidversorgung zum Versorgen der wenigstens einen Spannbacke mit dem Sperrfluid.

Vorzugsweise weist die Imprägniervorrichtung eine Dreheinrichtung zum Drehen der Spanneinheit auf, um den daran eingespannten Stator um seine Mittelachse zu drehen.

Es ist bevorzugt, dass die Sperrfluidversorgung eine Druckgasquelle zum Liefern eines unter Druck stehenden Gases als Sperrfluid aufweist.

Vorzugsweise umfasst die Imprägniervorrichtung eine Harzauftragseinrichtung zum Auftragen des Harzes auf einen zu imprägnierenden Bereich eines sich in der Imprägniervorrichtung drehenden Stators.

Es ist bevorzugt, dass die Harzauftragseinrichtung wenigstens eine zwischen einer Betriebsstellung und einer Ruhestellung bewegbare Träufeldüse zum Aufträufeln von Harz auf den zu imprägnierenden Bereich des Stators aufweist.

Vorzugsweise umfasst die Imprägniervorrichtung eine Druckgasquelle zum Liefern eines Gases als Sperrfluid mit einem relativ zu einem Umgebungsdruck um 0,05 bis 4 Bar, vorzugsweise 0,05 bis 1 Bar, insbesondere 0,1 bis 0,2 Bar erhöhten Druck.

Vorzugsweise umfasst die Imprägniervorrichtung eine Temperiereinrichtung zur steuerbaren Temperaturbeeinflussung des Sperrfluids.

Gemäß einem weiteren Aspekt schafft die Erfindung eine Imprägnieranordnung mit einer Imprägniervorrichtung nach einer der voranstehenden Ausgestaltungen und einem zu imprägnierenden Bauteil zum Bilden eines Stators einer elektrischen Maschine, wobei das Bauteil ein ringförmiges Blechpaket mit Nuten aufweist, in denen elektrische Leiter eingesetzt sind, die aus Nutöffnungen hervorstehen, wobei die Imprägniervorrichtung zum Auftrag von Imprägniermittel auf einen die Nutöffnungen aufweisenden oder an die Nutöffnungen angrenzenden Ringbereich ausgebildet ist und wobei der von Imprägniermittel frei zu haltende Kontaktbereich an einem Innenbereich des Blechpakets angeordnet ist.

Gemäß einem weiteren Aspekt schafft die Erfindung ein Herstellverfahren zum Herstellen einer Spannbacke nach einer der voranstehenden Ausgestaltungen, umfassend 3D-Drucken wenigstens eines den Fluiddurchlassbereich aufweisenden Spannbackenkörpers.

Es ist bevorzugt, dass die gesamte Spannbacke einstückig mittels 3D-Metalldruck hergestellt wird, wobei der Fluiddurchlassbereich offenporig ist und weitere Oberflächenbereiche der Spannbacke fluiddicht gedruckt oder beschichtet oder verkleidet werden.

Gemäß einem weiteren Aspekt schafft die Erfindung ein Imprägnierverfahren zur Imprägnierung eines Stators, umfassend Verwendung der Imprägniervorrichtung nach einer der voranstehenden Ausgestaltungen.

Vorzugsweise wird das Imprägnierverfahren zum Imprägnieren eines Stators einer elektrischen Maschine in Serienproduktion durchgeführt, und es umfasst:
0) Einspannen des Stators durch Auseinanderbewegen der Spannbacken, bis die Kontaktflächen der Spannbacken an einem inneren Bereich eines Blechpakets des Stators anliegen,
a) Auftragen von Harz auf einen zu imprägnierenden Bereich des Stators und
b) Richten einer Sperrgasströmung durch das offenporige Material des Fluiddurchlassbereichs hindurch auf den inneren Bereich des Blechpakets, um die Kontaktflächen frei von Harz zu halten.

Vorzugsweise umfasst Schritt a):
a1) Drehen des ringförmigen Stators (12) während des Auftragens um eine Drehachse (38). Vorzugsweise umfasst Schritt a):
a2) Aufträufeln des Harzes mittels wenigstens einer Träufeldüse (40).

Vorzugsweise umfasst Schritt a):
a3) Temperieren des Harzes vor dem Auftragen auf eine vorbestimmte Temperatur. Vorzugsweise umfasst Schritt a):
a4) Temperieren des Blechpakets vor und/oder während des Auftragens auf eine vorbestimmte Temperatur.

Vorzugsweise umfasst Schritt a):
a5) Bewegen einer Träufeldüse (40) zu einer Betriebsstellung zum Aufräufeln und in eine Ruhestellung zum Aufnehmen eines neuen Stators und Entfernen eines bereits beträufelten Stators.

Vorzugsweise umfasst Schritt a):
a6) drehendes Antreiben der Spanneinheit (36), um das Blechpaket um seine Mittelachse während des Harzauftrags zu drehen.

Vorzugsweise umfasst das Imprägnierverfahren den Schritt:
c) Gelieren des Harzes unter Drehbewegung des mittels der Spanneinheit eingespannten Stators, bis eine Viskosität des Harzes erreicht ist, die ein Auslaufen von Harz verhindert, wobei bei einer Übergabe zwischen einer Harzauftragsstation zur Durchführung der Schritte a) und b) und einer Gelierstation zur Durchführung des Schritts c) eine Sperrfluidzufuhr unterbrochen sein kann.

Vorzugsweise umfasst das Imprägnierverfahren den Schritt:
d) endgültiges Aushärten des Harzes in einem Ofen.

Bevorzugte Ausgestaltungen der Erfindung schaffen ein Spannelement mit schmutzabweisender Oberflächenstruktur. Insbesondere wird eine Spannbacke mit schmutzabweisendem Spannbereich geschaffen.

Mit bevorzugten Ausgestaltungen der Erfindung lassen sich Verschmutzungen des eingespannten Werkstücks durch Arbeitsfluid an Bereichen, die von Arbeitsfluid frei zu halten sind, auf einfache Art und Weise verhindern und nachträgliche Reinigungsarbeiten zur Entfernung eines unerwünschten Arbeitsfluidauftrages entfallen oder sind zumindest deutlich verringert.

Ein bevorzugtes Einsatzgebiet ist die Behandlung von Bauteilen von elektrischen Maschinen mit Harz. Mit bevorzugten Ausgestaltungen der Erfindung lassen sich dabei Verschmutzungen des Bauteils durch Harz an Bereichen, die von Harz frei zu halten sind, auf einfache Art und Weise verhindern und nachträgliche Reinigungsarbeiten zur Entfernung eines unerwünschten Harzauftrages entfallen oder sind zumindest deutlich verringert.

Vorzugsweise werden eine Spannbacke und eine Spanneinheit vorgeschlagen, die insbesondere im Bereich der Stator-Fertigung für elektrische Maschinen verwendbar ist. Bei einer bevorzugten Verwendung wird die Wicklung im Stator, welche üblicherweise aus isoliertem Kupferdraht besteht, nach dem Einbringen zusätzlich mit einem Harz oder ähnlichem isoliert. Dies dient dazu, den Spalt in der Nut mit Harz zu füllen, um eine bessere Wärmeleitfähigkeit zwischen Kupfer und Blechpaket zu erhalten, sowie die Teilentladungsbeständigkeit zu verbessern, sowie auch die Isolationsdicke der Leiter zu erhöhen, um eine höhe Durchschlagsfestigkeit zu erreichen. Insbesondere sind die elektrischen Maschinen Fahrmotoren für Elektrofahrzeuge mit entsprechenden Leistungsbereichen und Anforderungen an die Betriebs- und Umgebungsbedingungen in derartigen Fahrzeugen.

Die Kupferleiter in den Statornuten können aus dünnen runden Kupferleiter sein (Träufelwickeln, Nadelwickeln) oder aus dickeren Drähten, Formdrähten, rechteckigen Kupferdrähten, Litzendrähten etc. bestehen, auch andere Leiter wie Aluminium können zum Einsatz kommen.

Das Harz selbst ist bei den bevorzugten Verwendungen derart ausgewählt, dass es den späteren Betriebstemperaturen standhalten, oftmals über 150°C, kann und auch gegen Öl etc. für späteren Betrieb resistent ist. Zusätzlich ist es unempfindlich gegenüber verschmutze Oberflächen, d.h. das Harz hat sehr gute Benetzungseigenschaften und chemische Beständigkeit.

Aufgrund des Einsatzgebietes des Harzes ist dieses resistent gegen die meisten Lösungsmittel, auch gegen höhere Temperaturen etc. Aufgrund der geforderten sehr guten Benetzungsfähigkeit des Harzes ist es sehr schwierig, eine anhaftende Verschmutzung umliegender Bauteile zu verhindern.

Daher wird bei der Imprägniervorrichtung, der Imprägnieranordnung und dem Imprägnierverfahren gemäß bevorzugten Ausgestaltungen der Erfindung das Träufeln eingesetzt, bei dem das Harz gezielt auf die Wicklung aufgebracht wird, und somit Verschmutzungen am Innendurchmesser, Außendurchmesser, Verschaltelement etc. vermieden werden können. Bevorzugt wird das Harz, oft für die Viskosität vorgewärmt, dosiert auf den drehenden Stator aufgebracht, wobei sich das Harz aufgrund der Kapillarwirkung in die Nuten des Stators einzieht.

In den Ausführungsbeispielen in der nicht vorveröffentlichten internationalen Patentanmeldung PCT/EP2020/072816 ist eine Sperrluft vor und nach den Spannbacken beim Spannen am Innendurchmesser eines Blechpakets des Stators aufgeführt, wodurch eine Verschmutzung verhindert wird, indem verhindert wird, dass das Harz auf der Oberfläche zur Spannbacke läuft. Auch ist eine aufschraubbare poröse Backe beschrieben. Weitere Untersuchungen haben ergeben, dass die Anschraubung und die Abdichtung der aufgeschraubten Backe schwierig sind, auch wegen der unterschiedlichen thermischen Längenausdehnungskoeffizienten.

Bei besonders bevorzugten Ausgestaltungen der hier vorliegenden Erfindung wird gezielt eine Monobacke aus rein metallischem Material vorgeschlagen, wobei hier die Spannbacke insbesondere per 3D-Metalldruck erzeugt wird, und nicht aus Metallschaumplatten hergestellt ist, die zum Teil Kunststoff-Bindemittel mit anderen thermischen Längenausdehnungsmodulen enthalten und/oder geringe Festigkeit aufweisen.

Beim Träufeln eines Stators wird dieser vorzugsweise während des Träufelns sowie bis zum Aushärten des Harzes unter Drehung gehalten, mehr bevorzugt in horizontaler Lage, damit das Harz nicht aus dem Stator herausläuft. Dies kann mit einem Honig-Löffel verglichen werden, der nicht tropft, solange man ihn ständig dreht, und sich dadurch der Honig dickflüssig um den ganzen Löffel ansammelt.

Um den Stator beim Träufeln drehen zu können, wird dieser vorzugsweise in ein drehbares Spannfutter aufgespannt, welches den Stator um die Rotationsachse dreht. Das Einspannen mittels der Spanneinheit kann von außen nach innen (Außenspannen) oder von innen nach außen (Innenspannen) erfolgen. Beim Außenspannen ist der Zugang der Wickelköpfen der Wicklung auf beiden Seiten eingeschränkt, daher wird der Stator vorzugsweise am Innendurchmesser aufgespannt, wo sich die offenen Nuten befinden, welche mit Harz gefüllt werden. Ein stirnseitiges Spannen ist ebenfalls möglich, würde aber den Zugang der Träufeldüsen und das Träufelergebnis negativ beeinflussen, weswegen es weniger bevorzugt ist.

Bevorzugte Ausgestaltungen der Spannbacke und der Spanneinheit lösen das Problem beim Innenspannen der zu träufelnden Statoren, dass sich Harz zwischen der Spannbacke und der Spannfläche ansammelt, d.h. am Innendurchmesser des Stators. Diese Verschmutzung am Innendurchmesser ist aufgrund geringer Spalte im späteren Betrieb zum Rotor nicht gewünscht, auch verschmutzte Spannbacken sind nicht gewünscht, eine Abreinigung des flüssigen Harzes ist auch mit Lösungsmittel oder Abblasen nur bedingt möglich.

Zu diesem Zeitpunkt wäre das Harz noch flüssig und einfacher abzureinigen, jedoch muss der Stator ständig in Bewegung bleiben, um ein Abtropfen zu verhindern, was eine Reinigung der Innenfläche erschwert, ggf. müsste der Stator zur Reinigung von innen nach außen umgegriffen werden.

Anschließend wird das Harz unter Drehbewegung in einem Ofen geliert, d.h. es härtet aus, üblicherweise bei Temperaturen zwischen 130-200°C. Nach dem Aushärten des Harzes braucht der Stator nicht mehr gedreht werden, allerdings lässt sich ein ausgehärtetes Harz nicht mehr einfach reinigen, auch nicht mit Lösungsmittel. Es ist ein mechanisches Entfernen oder Entfernen mit Laser der unzulässigen Harzanhaftungen am Stator oder Spannbacke notwendig.

Das Aushärten erfolgt bei Temperaturen bis zu 200°C, d.h. die Spannmittel und insbesondere die Spannbacken sollten bei den bevorzugten Verwendungen für diese Temperaturen ausgelegt sein, daher sind nur wenige Kunststoffe (z.B. PEEK) als Spannmittel für derartige Einsatzzwecke geeignet, der Kunststoff PTFE mit guten abweisenden Eigenschaften kann nur bedingt bei diesen hohen Temperaturen eingesetzt werden.

Der Einsatz von Kunststoff-Spannbacken mit guten abweisenden Eigenschaften ist jedoch auch aufgrund der Temperaturdifferenz im Prozess schwierig, da die Spannbacke sich bis auf 200°C erhöht, und dann wieder auf Raumtemperatur abkühlt, wobei aufgrund der unterschiedlichen Längenausdehnungskoeffizienten zwischen z.B. PTFE-Spannbacke und Stahl-Spannwerkzeug stets eine Relativbewegung oder Verspannung stattfindet, was zu Verschleiß oder sogar Dauerbrüchen in den Spannbacken führt.

Denkbar ist auch ein einmaliges Aufbringen einer Trennschicht, z.B. Trennspray, Silikonspray, temporäres Anbringen von Teflon Band über die Spannbacken etc., was die Verschmutzung der Backen verhindert, und nach dem Prozess wieder entfernt wird; dies ist jedoch bei Fertigung mit hohen Stückzahlen kostenintensiv, auch das verschmutzte Einwegmaterial muss entsorgt werden, auch Trennspray muss aus dem Bauteil entfernt werden. Ein sich verflüchtigendes Trennspray ist aufgrund Gefahrstoffe/Aerosole nicht gewünscht.

Besonders bevorzugte Ausgestaltungen der Erfindung bieten eine Lösung, um den Stator beim Träufeln innen greifen zu können, um eine sehr gute Zugänglichkeit von mehreren Träufeldüsen an beiden Seiten des Stators zu erreichen, wobei gleichzeitig jedoch vermieden wird, dass sich Harz am Innendurchmesser zwischen den Spannflächen (Kontaktflächen) des Spannfutters und Stators ansammelt, was zu einer unerwünschten Verschmutzung führt.

Versuche haben ergeben, dass das Harz in den offenen Nuten axial durch den Stator läuft, und sich der Harzfluss auf den Leitern innerhalb der Nut so stark erhöhen kann, dass der flüssige Harzaufbau auf den Leitern Richtung Stator-Innendurchmesser größer ist als der Abstand des innersten Leiters zum Stator- Innendurchmesser, d.h. die sich bewegende Flüssigkeit auf den Leitern kann temporär in den Stator-Innenraum ragen. Wenn sich nun auf Höhe Stator-Innendurchmesser eine Spannbacke befindet, wird diese benetzt und somit verschmutzt.

Eine theoretische Abhilfe wäre das Fräsen von Längsnuten in die Spannbacken, um das Benetzen zu vermeiden; allerdings ist eine Ausrichtung hier aufwendig, aber möglich. Die Praxis hat jedoch gezeigt, dass noch weitere Faktoren die Verschmutzung beeinflussen, da bei einigen Stator-Designs trotz der Nut in den Spannbacken eine Verschmutzung auftrat.

Auch ein Luftvorhang kann das Harz wieder in die Tiefe verdrängen, um ein Verschmutzen zu verhindern.

Trotz dieser Maßnahmen sind z.T. weiter Verschmutzungen vorhanden.

Es wurde bei den Versuchen erkannt, dass nicht nur das Harz, welches in zu geringem Abstand zur Spannbacke in der Nut fließt, die Spannbacke verschmutzt, sondern dass auch das Blechpaket selbst eine Kapillarwirkung aufweist aufgrund des schichtmäßigen Aufbaus. Ein Blechpaket besteht üblicherweise zur Reduzierung der elektrischen Verluste aus gestapelten Einzelblechen, welchen aufeinandergestapelt (paketiert) sind. Dies kann durch Verkleben, Stanzlaschen, Schweißen am Außendurchmesser etc. erfolgen, oft ist jedoch der Zahnbereich am Innendurchmesser nicht fest verbunden, d.h. die Zähne sind weiterhin aus gestapelten Einzelblechen gebildet, wobei zwischen jedem Einzelblech eine Kapillarwirkung in radialer und tangentialer Richtung (rechtwinklig zur Axialrichtung des Stators) vorhanden ist. Somit "zieht" sich das Harz, welches sich in den Nuten unter der Spannbacke befindet, durch die Kapillarwirkung des Statorblechpaket radial, also quer zur Stator-Längsachse, nach außen unter die Spannbacke bzw. auf die Spannflächen oder Kontaktflächen von Spannbacke und Blechpaket (Beispiel für Kontaktbereich).

Durch diesen grundsätzlichen Aufbau des Statorblechpakets entsteht die Verschmutzung der Spannbacken auch dadurch, dass sich das Harz durch die Kapillarwirkung zum Innendurchmesser oder Außendurchmesser des Stators "zieht" und die Spannbacken verschmutzt, obwohl kein Fließen des Harzes in diesen Bereich vorhanden ist.

Bevorzugte Ausgestaltungen der Erfindung schaffen eine Spannbacke, welche beim radialen Spannen eines Stators am Innen- oder Außendurchmesser nicht verschmutzt bzw. mit Harz benetzt wird, wenn der Stator geträufelt wird, und dabei
- das Harz in den Nuten axial Richtung Spannbacke fließt, wobei hier das flüssige Harz temporär in den Stator-Innendurchmesser-Bereich ragen kann,
- das Harz sich aufgrund der Kapillarwirkung zwischen den geschichteten Einzelblechen des Statorblechpakets radial nach innen und nach außen "zieht", und sich u.a. auch auf der Oberfläche im gespannten Bereich unter der Spannbacke anlagert.

Es wird eine Spannbacke vorgeschlagen, deren Spannbereich durch eine Sperrfluidströmung frei von Verschmutzungen gehalten wird. Als Sperrfluid wird vorzugsweise Luft eingesetzt, auch andere Fluide und insbesondere Gase sind möglich. Im Folgenden werden Vorteile vorteilhafter Ausgestaltungen am Beispiel der Verwendung von Luft als Sperrfluid erläutert, es sollte klar sein, dass dies nur ein Beispiel ist und auch andere Sperrfluide eingesetzt werden können.

Bei bevorzugten Ausgestaltungen der Erfindung wird eine Spannbacke verwendet, welche im Spannbereich, d.h. an der Kontaktfläche zum Stator, und/oder an den angrenzenden Flächen des Spannbereichs (Kontaktnahbereich) eine Spannbackenstruktur verwendet, die offenporig und somit luftdurchlässig (oder durchlässig für ein anderes eingesetztes Sperrfluid) ist, und eine Luftströmung bzw. Luftdruck (allgemeiner Sperrfluidströmung bzw. Sperrfluiddruck) aufgebaut wird und somit ein überschüssiges oder sich hochziehendes Harz durch entsprechendes Gegendruck bzw. Luftbewegung bzw. Blasen von der Spannbacke weg verdrängt wird.

Dieses Verdrängen ist bevorzugt jedoch nur räumlich sehr begrenzt, ein zu starkes Blasen durch z.B. direkte Pressluft könnte auch das Harz auf dem Leiter verdrängen oder die Harzverteilung in der Nut/Kopf negativ beeinflussen, was nicht gewünscht ist.

Daher wird vorzugsweise nur ein sehr begrenzter räumlicher Luftvorhang aufgebaut mit nur sehr geringer Luftmenge, da die Luft auch vom Stator abgeleitet werden muss, ohne den gesamten Träufelprozess nachteilig zu beeinflussen.

Ausgestaltungen der Erfindung betreffen daher den Einsatz einer Spannbacke mit sehr feiner offenporiger Struktur, da hier der notwendige "Luftvorhang" bzw. ein "Luftpolster" direkt an der Oberfläche gebildet wird ohne hohen Luftverbrauch.

Gebohrte Luftkanäle größeren Durchmessers (z.B. >0,5mm) bilden diesen Effekt nicht flächendeckend direkt an der Oberfläche, und haben eine zu weite Ausbreitung des Verdrängungseffektes, was nicht gewünscht ist.

Daher wird die offenporige Struktur eingesetzt, welche Porengrößen enthält, die mit herkömmlichen zerspanenden Maschinen nicht hergestellt werden kann oder sehr kostenintensiv ist, z.B. Struktur mit sehr vielen Löchern.

Daher wird bevorzugt eine offenporige Struktur im Mikrobereich eingesetzt, welche auch bei metallischen Filtern zum Einsatz kommt. Die Spannbacke sollte für die bevorzugten vorgeschlagenen Verwendungen Belastungen auch bei 200°C standhalten, daher werden bevorzugt metallische Materialien eingesetzt.

Hierbei kann die Spannbacke durch Aufschäumen offenporig hergestellt sein, entweder aus Aluminium oder sogar aus Stahl.

Um Luftverluste möglich gering zu halten, ist zu bevorzugen, dass die offene Struktur nur in den Bereichen vorhanden ist, wo ein Luftvorhang und somit Verdrängen des Harzes gewünscht ist, die anderen Bereiche sind vorzugsweise versiegelt.

Somit ist eine Spannbacke möglich, die komplett aus einem offenporigen Material besteht, und in den unerwünschten offenporigen Bereichen entsprechend versiegelt ist, d.h. die Porigkeit auf der Oberfläche verschlossen ist.

Es ist eine bevorzugte Variante, die Offenporigkeit nur in den Bereichen zu erzeugen, in denen diese erwünscht ist, wobei in den anderen Bereichen aufgrund höherer Festigkeit Vollmaterial eingesetzt wird.

Um aufgrund der Temperaturschwankungen und somit Dauerbrüche aufgrund der unterschiedlichen thermischen Ausdehnungskoeffizienten zu vermeiden, wird bevorzugt für die Spannbacke für die Bereiche mit Offenporigkeit und verschlossene Bereiche das gleiche Grundmaterial eingesetzt bzw. werden Materialien mit gleichen Längenausdehnungskoeffizienten eingesetzt, wobei die Materialien vorzugsweise derart gewählt sind, dass sie auch einer Dauerbelastung von 200°C standhalten.

Daher wird bevorzugt ein lokal offenporiger Spannkörper eingesetzt, der möglichst homogen und komplett aus Metall ist, und keine zusätzlichen Bindemittel/ Reste enthalten, welche bei Metallfilterplatten herstellungsbedingt enthalten sind.

Es ist bevorzugt, die Spannbacke mittels 3D-Metalldruck herzustellen, da hier die Spannbacke aus einem Material (einzelnes Material und/oder einstückig ohne Grenzflächen) besteht, und gezielt in Bereiche eine Offenporigkeit eingearbeitet werden kann, ohne dass die Kosten wesentlich erhöht werden. Dichte Wandbereiche können direkt gedruckt werden, und müssen nicht nachträglich versiegelt werden. Diese Offenporigkeit können sehr kleine Kanäle sein (<250µm) oder auch eine Waben- bzw. Stützstruktur, welche offenporig ausgeführt wird.

Die Spannbacke wird mit dieser offenporigen Struktur im Bereich der Spannfläche (Kontaktfläche, die in unmittelbaren Kontakt mit dem Werkstück kommt) ausgeführt, um zu verhindern, dass sich das Harz, welches aufgrund der Kapillarwirkung des Statorblechpakets radial bis zu den Spannflächen zieht, sich auf der Spannfläche zwischen Spannbacke und Blechpaket, anhäuft. Um dies zu vermeiden, ist eine sehr feine Porigkeit vorgesehen, nur Bohrungen zu diesen Bereichen, welche mit Druckluft versorgt werden, würden diesen Verdrängungseffekt nicht über die gesamte Spannfläche erzeugen.

Bei den bevorzugten Ausgestaltungen wird diese Offenporigkeit mit einem Medium (Sperrfluid) kombiniert, welches durch die Offenporigkeit entgegen der Fließrichtung des Harzes und/oder von der Spannfläche weg in Richtung Statorblechpaket durch die offenporigen Bereiche fließt bzw. hindurchgeführt wird. Dies können flüssige oder gasförmige Medien sein, idealerweise mit niedriger Geschwindigkeit und somit laminarer Strömung.

Bevorzugt wird hier Luft, welche mit einem bestimmten Druck in die Spannbacken in einem bestimmten Bereich eingeleitet wird, und dann durch die offenporige Struktur in Richtung Spannfläche zum Stator strömt, und hier mit bestimmten Druck und/oder bestimmter Luftmenge einen abweisenden lokalen Luftvorhang bzw. ein Luftpolster auf der Oberfläche bildet, und somit verhindert, dass Harz, welches aufgrund der Kapillarwirkung aufsteigt, oder auch seitlich an die Spannbacken über die Oberfläche oder über die Nuten an die Spannbacke fließt, bis zur Spannbacke vordringen kann.

Es wird somit mit der offenporigen Struktur in Kombination mit dem Sperrfluid, insbesondere der Sperrluft, verhindert, dass die Spannbacke bei potentiellen Kontaktbereichen vom Harz benetzt wird und somit verschmutzt wird.

Die Offenporigkeit der Struktur befindet sich je nach Verschmutzungsursachse, d.h. ob das Harz axial über die Nut zur Spannbacke gelangt oder radial, unmittelbar im Bereich der Spannfläche (=Kontaktfläche), und/oder auch an den angrenzenden Flächen der Spannflächen, welche bzgl. Verschmutzung gefährdet sind, und somit ein lokaler Luftvorhang sinnvoll ist. Daher ist die Spannbacke gemäß bevorzugten Ausgestaltungen nicht nur direkt an den Spannflächen offenporig gestaltet, sondern auch an den Randbereichen.

Der beschriebene Luftvorhang, der durch die luftdurchlässige und luftdurchströmte Oberfläche erzeugt wird, befindet sich dadurch auf Oberflächen ohne Kontakt zum Statorblechpaket und/oder auf Oberflächen mit direktem Kontakt zum Statorblechpaket.

Zum Bilden des Luftvorhangs kommt nicht nur Luft in Frage, sondern es sind alle denkbaren Gase oder technische Gase, Edelgase etc. denkbar, falls die Anwendung von reiner Luft zu nachteiligen Eigenschaftsänderungen des Harzes oder Probleme aufgrund der in der Luft enthaltenen Feuchtigkeit auftreten würde.

Vorzugsweise wird feinst gefilterte Luft eingesetzt, um ein Verschmutzen und somit Verschließen der kleinen Poren der Spannbacke zu verhindern.

Der mögliche Einsatz der Spannbacken oder Spanneinheiten gemäß Ausführungsbeispielen der Erfindung beschränkt sich jedoch nicht nur auf den Bereich des Träufelns von Statoren, sondern kann überall dort eingesetzt werden, wo Werkstücke gespannt werden sollen, wo die zu spannende Werkstücke/Bauteile eine Kapillarwirkung unter den Spannflächen aufweisen, und verhindert werden soll, dass ein Aufsteigen bzw. Kriechen von Flüssigkeiten in Richtung Spannfläche bzw. Spannwerkzeug verhindert werden soll. Der Grund für das Verhindern der Verschmutzung kann hierbei unterschiedliche Gründe haben wie teure mechanische Reinigung, Gefahrstoffe, nachträglicher menschlicher Kontakt, Reaktion mit dem Spannwerkzeug, Verkleben des Spannwerkzeugs.

Die Spannbacken/Spanneinheiten gemäß Ausführungsbeispielen der Erfindung können auch überall dort eingesetzt werden, wo eine Verschleppung der Flüssigkeit/Harzes vermieden werden soll.

Die Spannbacken/Spanneinheiten gemäß Ausführungsbeispielen der Erfindung können auch dazu genutzt werden, während des Aushärtens des Harzes im Ofen das Werkstück zu spannen, und zu verhindern, dass das Harz auf bzw. zwischen die Spannflächen der Spannbacke und des Werkstücks, in diesem Fall das Statorblechpaket, gelangt, und somit die Spannbacke am Blechpaket festklebt.

Die festen und porösen Bereiche der Spannbacke bestehen vorzugsweise aus einem Teil, dies hat den zusätzlichen Vorteil, dass keine Abdichtung zwischen unterschiedlichen Teilen der Spannbacke erforderlich ist. Die Spannbacken können aber auch aufgrund anderer Prioritäten mehrteilig ausgeführt sein, z.B. dass der poröse Bereich ein eigenes Teil ist, welches auf den Grundkörper dauerhaft oder temporär wie z.B. Schrauben aufgebracht wird.

Ausführungsbeispiele der Erfindung werden im Folgenden anhand der beigefügten Zeichnungen näher erläutert. Darin zeigen:
Fig. 1 bis 3 unterschiedliche perspektivische Ansichten einer Spannbacke gemäß einer bevorzugten Ausführungsform;
Fig. 4 eine Ausführungsform einer Spanneinheit mit mehreren der Spannbacken gemäß Fig. 1 bis 3;
Fig. 5 eine perspektivische Ansicht eines beispielhaften Werkstücks, welches durch die Spannbacke bzw. Spanneinheit gemäß den Fig. 1 bis 4 eingespannt werden kann, wobei das Werkstück ein Stator als Beispiel für ein Bauteil einer elektrischen Maschine ist, welches in einer Imprägniervorrichtung in Serienproduktion zu imprägnieren ist;
Fig. 6 eine Querschnittsansicht durch den Stator von Fig. 5 entlang einer senkrecht zu einer Mittelachse des Stators liegenden Querschnittsebene;
Fig. 7 eine Vergrößerung eines Bereichs des in Fig. 6 dargestellten Stators;
Fig. 8 eine Ansicht wie in Fig. 7 für einen Stator gemäß einer anderen Ausführungsform;
Fig. 9 eine perspektivische, teils weggeschnittene schematische Ansicht einer Anordnung aus Spanneinheit von Fig. 4 mit einem Stator als daran eingespanntem Werkstück;
Fig. 10 eine Querschnittsansicht durch die Anordnung von Fig. 9 entlang einer senkrecht zu einer Mittelachse des Stators liegenden Querschnittsebene;
Fig. 11 eine Detailansicht eines Details von Fig. 10, in der ein Kontaktbereich dargestellt ist, in dem eine Spannbacke den Stator kontaktiert;
Fig. 12 eine perspektivische teils geschnittene Ansicht des Kontaktbereichs von Fig 11, wobei eine Ausführungsform einer Sperrgasströmungserzeugungseinrichtung schematisch dargestellt ist;
Fig. 13 - 16 unterschiedliche Ansichten einer Imprägnieranordnung mit gemäß einem Ausführungsbeispiel der Erfindung mit dem Stator während des Imprägniervorgangs in einer Imprägniervorrichtung, welche eine als Träufeleinrichtung ausgebildete Harzauftragseinrichtung, die Spanneinheit und die Sperrgasströmungserzeugungseinrichtung aufweist; und
Fig. 17 eine perspektivische Ansicht einer Variante der Spannbacke.

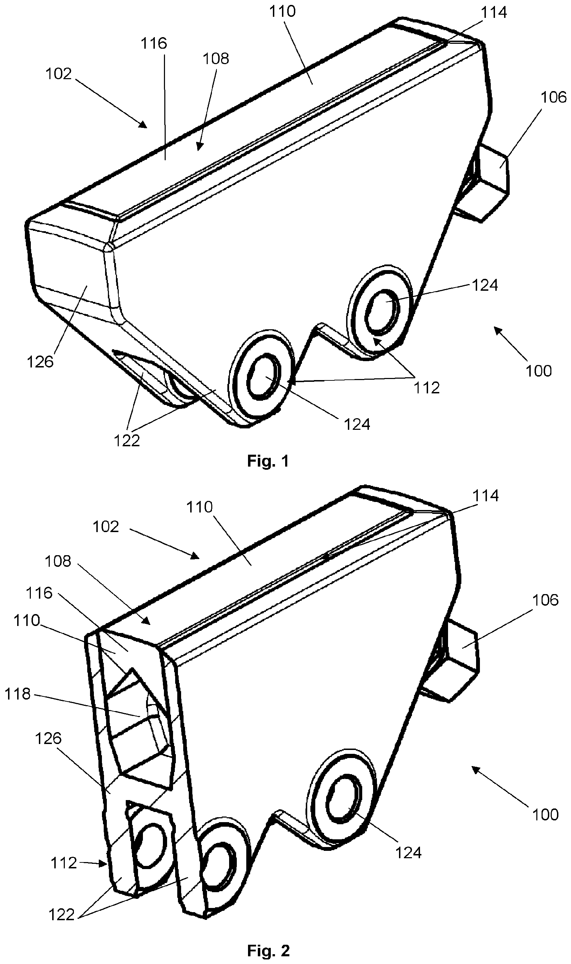

In den Fig. 1 bis 3 ist eine Ausführungsform einer Spannbacke 100 zum Einspannen eines Werkstücks bei einer Bearbeitung mit Arbeitsfluid dargestellt.

Die Spannbacke 100 ist dazu ausgebildet, eine Sperrfluidströmung auf einen von Arbeitsfluid frei zu haltenden Kontaktbereich 102 zwischen Spannbacke und Werkstück zu richten.

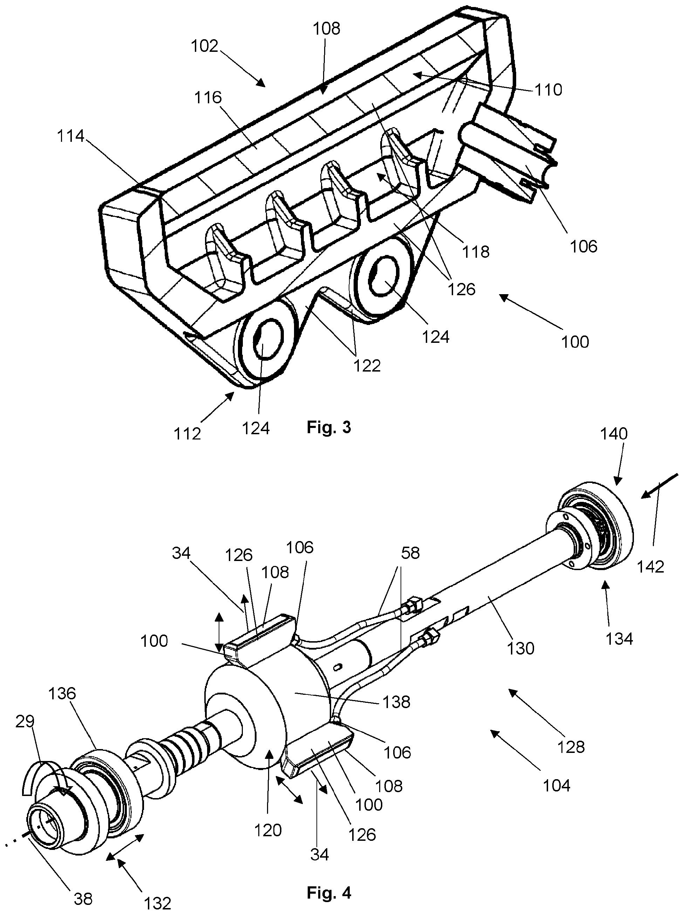

Die Spannbacke 100 kann in einer Spanneinheit 104 verwendet werden, von der ein Ausführungsbeispiel in Fig. 4 dargestellt ist und die dazu ausgebildet ist, mit mehreren relativ zueinander beweglichen Spannbacken 100 das Werkstück zur Bearbeitung einzuspannen.

Gemäß Fig. 1 bis 3, auf die nun wiederum Bezug genommen wird, weist die Spannbacke 100 einen Sperrfluideinlass 106, eine Kontaktfläche 108, einen Fluiddurchlassbereich 110 und einen Befestigungsbereich 112 auf.

Der Sperrfluideinlass 106 ist zum Einleiten von Sperrfluid in die Spannbacke 100 ausgebildet.

Der Fluiddurchlassbereich 110 ist fluidpermeabel ausgeführt und dadurch dazu ausgebildet, durch das Sperrfluid durchdrungen zu werden.

Die Kontaktfläche 108 dient zum Kontaktieren des Werkstücks beim Einspannen und ist bei der dargestellten Ausführungsform an dem Fluiddurchlassbereich 110 angeordnet. Der Fluiddurchlassbereich 110 bildet auch einen der Kontaktfläche 108 benachbarten Kontaktflächennahbereich 114. Bei anderen, hier nicht näher dargestellten Ausführungsformen der Spannbacke 100 ist der Fluiddurchlassbereich 110 nur entweder auf die Kontaktfläche 108 oder auf den Kontaktflächennahbereich 114 begrenzt.

Der Fluiddurchlassbereich 110 der Spannbacke 100 weist eine Schicht oder einen Körper aus einem offenporigen Material 116 mit einer fluidpermeablen offenporigen Struktur auf. Die durchschnittliche Porengröße des offenporigen Materials 116 ist kleiner als 0,5 mm.

Die Spannbacke 100 ist dazu ausgebildet, das durch den Sperrfluideinlass 106 eingeleitete Sperrfluid durch das offenporige Material 116 hindurch hin auf den von Arbeitsfluid frei zu haltenden Kontaktbereich 102 zu richten.

Insbesondere weist die Spannbacke 100 einen inneren Hohlraum 118 auf, in den der Sperrfluideinlass 106 mündet und der zu der Kontaktfläche 108 und dem Kontaktflächennahbereich 114 hin durch die Schicht oder den Körper aus offenporigem Material 116 begrenzt wird, so dass in den Hohlraum 118 unter Druck eingeleitetes Sperrfluid durch den Fluiddurchlassbereich 110 durch die Kontaktfläche 108 und/oder den Kontaktflächennahbereich 114 ausströmt.

Der Befestigungsbereich 112 ist dazu ausgebildet, die Spannbacke 100 zu befestigen. Dies kann auf ganz unterschiedliche Weise erfolgen und hängt von dem Aufbau der Spanneinheit 104 ab. Insbesondere kann damit die Spannbacke 100 an einem
Spannbackenbewegungsmechanismus 120 der Spanneinheit 104 befestigt werden, mittels dem mehrere Spannbacken 100 relativ zueinander bewegbar sind, um das Werkstück einzuspannen. Bei dem dargestellten Ausführungsbeispiel weist der Befestigungsbereich 112 Flansche 122 auf, an denen Befestigungsösen 124 oder Befestigungsbohrungen zum Durchgriff von nicht näher dargestellten Befestigern (z.B. Schrauben, Stifte oder dergleichen) ausgebildet sind.

Bei dem in den Fig. 1 bis 3 dargestellten Ausführungsbeispiel ist die Spannbacke 100 lediglich im Fluiddurchlassbereich 110 mit der offenporigen Struktur ausgebildet und ansonsten geschlossen oder versiegelt ausgebildet. Insbesondere ist bei den dargestellten Ausführungen die Spannbacke 110 außerhalb des Fluiddurchlassbereichs 110 massiv und ohne Poren ausgebildet. Bei anderen, nicht näher dargestellten Ausführungen ist die Spannbacke 100 ganz aus dem offenporigem Material 116 gebildet ist, das außerhalb des Fluiddurchlassbereichs 110 für Fluid undurchlässig versiegelt ist.

Die Spannbacke 100 besteht im Wesentlichen aus einem homogenen einstückigen Spannbackenkörper 126 besteht, der ganz oder bereichsweise mit der offenporigen Struktur ausgebildet ist. Dabei ist die Spannbacke 100 komplett aus Metall gebildet.

Aufgrund des Aufbaus aus einem homogenen einstückigen Spannbackenkörper 126 sind keine zusätzlichen Bindemittel, Bindeschichten oder innere Grenzflächen vorgesehen sind.

Das offenporige Material 116 mit der offenporigen Struktur ist bei den gezeigten Ausführungsbeispielen ein Metallmaterial. Es weist Poren mit einer durchschnittlichen Porengröße kleiner 250 µm auf. Bei einer Ausgestaltung weist das Material 116 Durchgangskanäle mit einem durchschnittlichen Durchmesser kleiner 0,5 mm, vorzugsweise kleiner 250 µm, auf.

Der Spannbackenkörper 126 ist durch 3D-Druck hergestellt. Dabei wird der Fluiddurchlassbereich 110 mit einer offenporige Waben- oder Stützstruktur gedruckt, während der Rest des Spannbackenkörpers 126 massiv ohne Poren gedruckt wird.

Die Fig. 1 bis 3 zeigen somit ein Beispiel einer Spannbacke 100 mit offenporiger Strukturoffenporiges Material 116 - im die Kontaktfläche 108 bildenden Spannbereich sowie in den angrenzenden Bereichen des Spannbereichs, wo mit einer Verschmutzung gerechnet werden kann.

Die Spannbacke 100 ist in dem dargestellten Fall komplett mittels 3D-Metalldruck erzeugt, wodurch ohne wesentliche Mehrkosten direkt Werkzeugstahl verwendet werden konnte. Der Fluiddurchlassbereich 110 mit der Kontaktfläche und dem Kontaktflächennahbereich 114 ist offenporig gedruckt, wahlweise mit kleinen Kanälen <200µm oder direkt mit Wabenstruktur, die keine geschlossene Deckschicht aufweist.

Die Spannbacke 100 wurde direkt mit einem Luftanschluss als Sperrfluideinlass 106 ausgeführt.

Die Spannbacke 100 ist so gestaltet, dass ein innerer Luftverteilungsraum - Hohlraum 118 - direkt ohne Stützstruktur gedruckt werden kann, somit ist keine Nacharbeit/Zugänglichkeit für den Luftverteilungsraum zwischen Luftanschluss und offenporiger Struktur erforderlich.

Die Spannfläche - Kontaktfläche 108 - selbst muss nicht nachgearbeitet werden, hier ist die raue Struktur aus dem 3D-Druck sogar von Vorteil, da diese eine höhere Reibung aufweist und somit ein zuverlässigeres Spannen erlaubt.

Eine hohe Verschleißfestigkeit wurde durch Verwendung von Werkzeugstahl mit anschließendem Härten erreicht.

An dem Befestigungsbereich 112 wurden eng tolerierte Anschlussgeometrien nachträglich spanend bearbeitet.

Die Spanneinheit 104 kann sehr unterschiedlich ausgebildet sein, und dem Fachmann sind unterschiedliche Spannbackenbewegungsmechanismen 120 bekannt, mit denen Spannbacken 100 zum Einspannen von Werkstücken zueinander bewegbar sind. Der Spannbackenbewegungsmechanismus 120 kann z.B. als Schraubstock oder zangenartig ausgebildet sein, um eine erste und eine zweite Spannbacke 100 mit ihren Kontaktflächen 108 zueinander gerichtet aufeinander zu zu bewegen, um so ein Werkstück dazwischen einzuspannen. Auch können mehrere Spannbacken 100 in einer Ringanordnung mit den Kontaktflächen nach innen gerichtet vorgesehen sein, wobei der Spannbackenbewegungsmechanismus 120 zur Radialbewegung der Spannbacken 100 ausgebildet ist, um ein Werkstück an seinem Außenumfang einzuspannen. Die in Fig. 4 beispielhaft dargestellten Spanneinheit 104 ist ebenfalls mit einer Ringanordnung von mehreren Spannbacken 100 - hier eine erste bis dritte Spannbacke 100 - versehen, wobei die Kontaktflächen 108 nach außen weisen. Der Spannbackenbewegungsmechanismus 120 ist hier dazu ausgebildet, die Spannbacken radial zu bewegen, wobei durch eine Bewegung nach radial außen ein Werkstück von innen gespannt werden kann.

Die in Fig. 4 gezeigte Spanneinheit 104 ist als Spanndorn 128 ausgebildet, der ein Einspannen des Werkstücks zur Drehung desselben ermöglicht. Beispiele von Maschinen zur drehenden Halterung und zum Bewegen und zum Handhaben solcher Spanndorne 128 bei der Werkstückbearbeitung sind der EP 3 772 162 A1 und der DE 10 2019 106 392 A1 sowie der DE 10 2019 106 392 A1 zu entnehmen. Der Spanndorn 128 ist insbesondere dazu ausgebildet in einer Gesamtanlage, wie sie in der DE 10 2019 106 392 A1 im Einzelnen beschrieben und gezeigt wird, und die im Folgenden erläuterten ergänzten Merkmale aufweist, verwendet zu werden.

Der Spanndorn 128 hat einen rohrförmigen Dornkörper 130 mit einer ersten Spanndornwechselschnittstelle 132 an einem ersten Ende und einer zweite Spanndornwechselschnittstelle 134 an seinem zweiten Ende aufweist. Ein Beispiel für einen genaueren Aufbau des ersten Endes des Dornkörpers 130 und der ersten Spanndornwechselschnittstelle 132 kann der EP 3 772 162 A1 entnommen werden, auf die für weitere Einzelheiten verwiesen wird. An der ersten Spanndornwechselschnittstelle 132 ist ein Handhabungsorgan 136 zur Betätigung des Spannbackenmechanismus 120 vorgesehen. Das Handhabungsorgan 136 weist hier einen Ringflansch 138 zur Erfassung durch einen nicht näher dargestellten Aktor (für ein Beispiel hierzu siehe die DE 10 2019 106 392 A1) auf, mittels dem das Handhabungsorgan 136 in axialer Richtung bezüglich der Mittelachse bewegbar ist. Im Inneren des Dornkörpers 132 wird diese Bewegung mittels einer nicht dargestellten Stange zu einem nur schematisch angedeuteten Umlenkgetriebe 138 übertragen, das in irgendeiner dem Fachmann bekannten Weise zum Umwandeln der Axialbewegung in eine Radialbewegung von Abtriebselementen des Umlenkgetriebes 138 ausgebildet ist, an denen die Spannbacken 100 befestigt sind. Beispielsweise ist ein Keilgetriebe oder eine Kurvenscheibe oder dergleichen für diese Umlenkung vorgesehen.

An der zweiten Spanndornwechselschnittstelle 134 ist der Dornkörper 130 mit einem Sperrfluidanschluss 140 versehen, in den unter Druck stehendes Sperrfluid 142 - angedeutet durch einen Pfeil in Fig. 4 - eingeleitet werden kann und über Sperrfluidleitungen 142 zu den Sperrfluideinlässen 106 der Spannbacken 100 geleitet werden kann.

Die Spannbacken 100 und die Spanneinheit 104 können überall dort zum Einspannen von Werkstücken eingesetzt werden, wo die Werkstücke selektiv an ausgewählten Bereichen mit einem Arbeitsfluid zu benetzen sind und wo die unerwünschte Tendenz besteht, dass der Kontaktbereich, wo die Spannbacken 100 das Werkstück erfassen, durch Kapillarwirkungen mit dem Arbeitsfluid verschmutzt wird. Dies lässt sich unter Einsatz einer Sperrfluidströmung durch die offenporige Struktur des Materials 116 hindurch wirksam vermeiden.

Der bevorzugte Verwendungszweck liegt bei einem Einspannen von Bauteilen 10 einer elektrischen Maschine, wobei das Bauteil 10 selektiv zu imprägnieren ist. Beispiele derartiger Bauteile sind Statoren 12 und Rotoren (nicht dargestellt) und sonstige Bauteile, die Wicklungen aufweisen, die in eine nichtleitende Matrix einzubetten sind. Insbesondere sind die Spannbacken 100 und die Spanneinheit 104 in einer vom Grundaufbau her gezeigten in der DE 10 2019 106 392 A1 gezeigten Imprägnieranlage verwendbar.

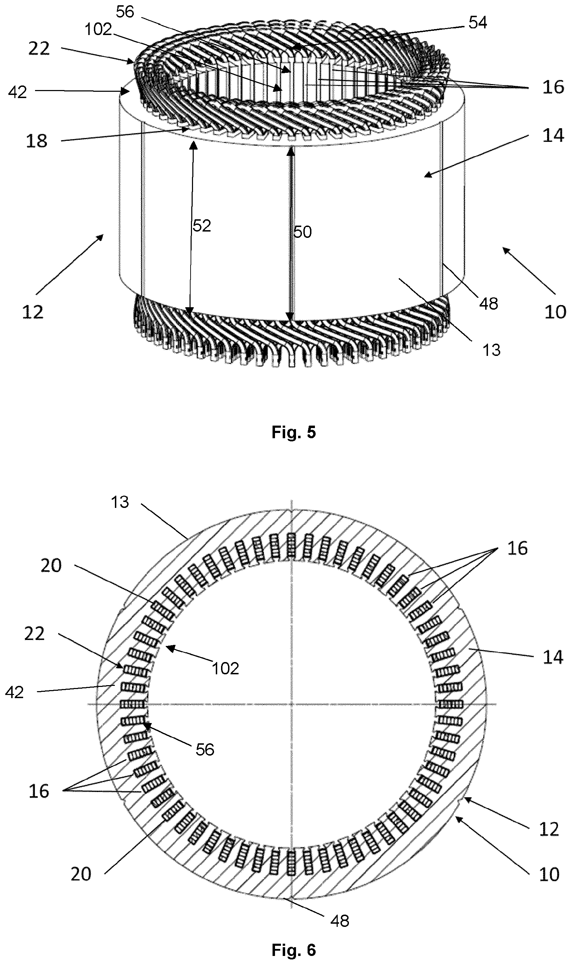

Die Fig. 5 bis 7 zeigen ein erstes Ausführungsbeispiel für ein zu imprägnierendes Bauteil 10 einer elektrischen Maschine. In diesem Ausführungsbeispiel ist das zu imprägnierende Bauteil 10 ein Stator 12 einer elektrischen Maschine und insbesondere eines Elektromotors, der als Fahrmotor in einem Elektrofahrzeug einsetzbar ist. In anderen Ausführungsbeispielen könnte das zu imprägnierende Bauteil 10 auch ein anderes Element einer elektrischen Maschine, wie zum Beispiel ein Rotor sein.

Der Stator 12 hat ein beispielsweise aus einem Blechpaket 13 hergestelltes, vorzugsweise ringförmiges Gehäuse 14 mit bezüglich der Mittelachse des Gehäuses 14 axial angeordneten Nuten 16, in welchen jeweils wenigstens ein Isolationspapier 18 und Drahtabschnitte 20 einer Spulenwicklung 22 untergebracht sind. Der in den Fig. 5 bis 7 dargestellte Stator kann beispielsweise durch ein Verfahren hergestellt sein, wie es näher in der deutschen Patentanmeldung DE 10 2018 103 962.3 sowie der WO 2018/233774 A1 und der WO 2018/233771 A1 beschrieben und gezeigt ist.

Dementsprechend können die Drahtabschnitte 20 in den Nuten 16 einen rechteckigen Querschnitt aufweisen.

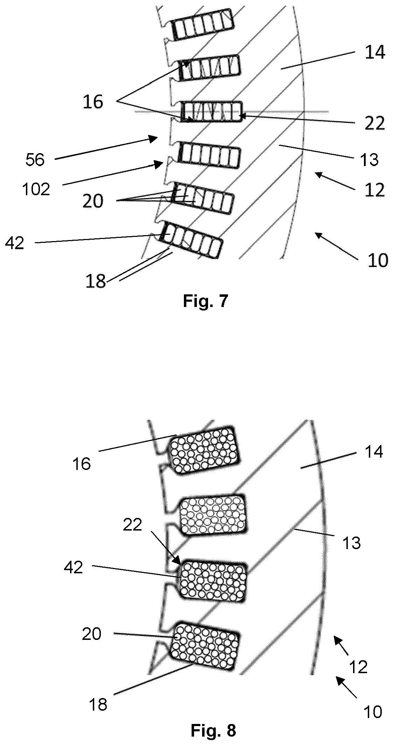

Fig. 8 zeigt ein weiteres Ausführungsbeispiel für den Stator 12, wo die Spulenwicklungen 22 durch eine Vielzahl von Drahtabschnitten 20 mit rundem Querschnitt gebildet sind.

Bei beiden Ausführungsformen des Stators 12 können die Nuten 16 nicht vollständig durch das Isolationspapier 18 und die Drahtabschnitte 20 befüllt werden.

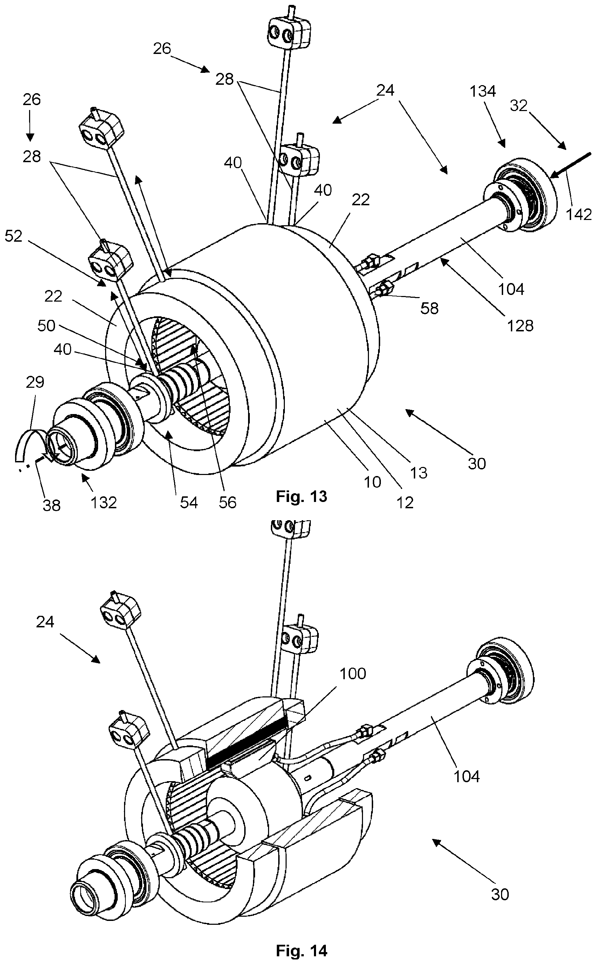

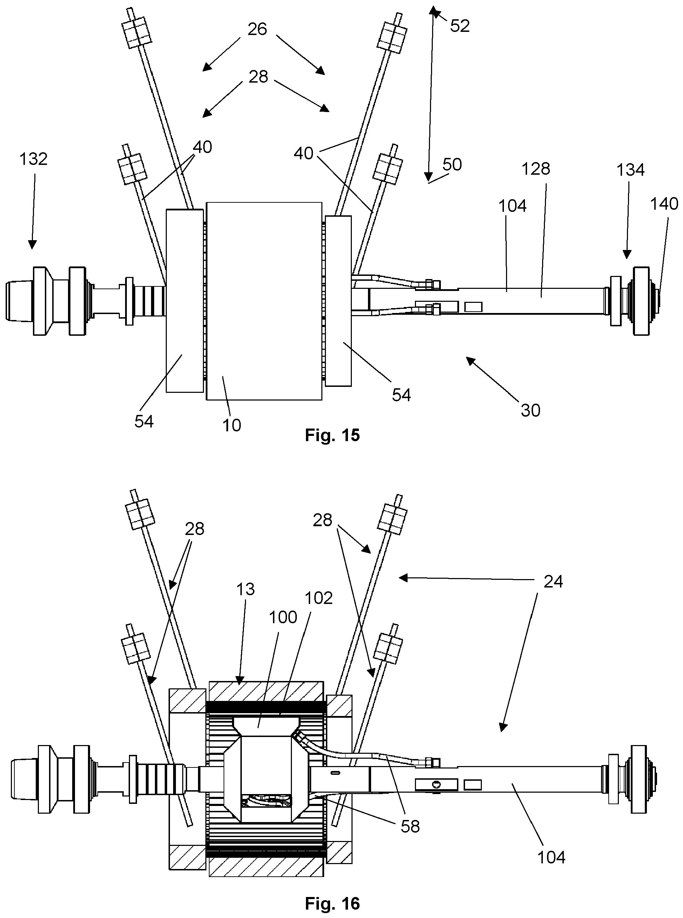

Zur Stabilisierung des Stators 12, Fixierung der Lage der Drahtabschnitte 20 in der Nut 16, zur besseren Isolierung zwecks Verhinderung von Überschlägen und zur Vermeidung von Beschädigungen von Isolationen der Drahtabschnitte 20 durch Vibrationen ist es vorteilhaft, die verbleibenden Hohlräume innerhalb der Nuten 16 mit einem elektrisch isolierenden Harz auszufüllen. Dieses Einfüllen von Harz erfolgt mittels einer später anhand der Darstellung in den Fig. 13 bis 16 erläuterten Imprägniervorrichtung 24.

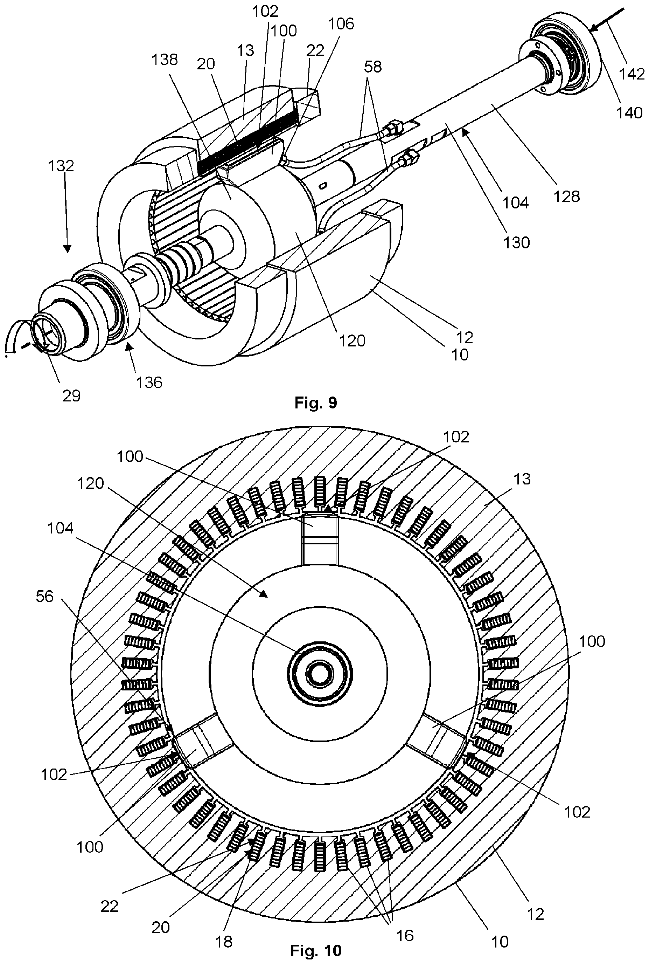

Hierzu wird der Stator 12, wie dies in den Fig. 9 bis 12 dargestellt ist, mittels der durch den Spanndorn 128 gebildeten Spanneinheit 104 am Innendurchmesser des Blechpakets 13 eingespannt. Der Spanndorn 126 wird hierzu mit radial zurückgezogenen Spannbacken 100 axial in das Blechpaket 13 eingeführt und anschließend werden über Bewegung des Handhabungsorgans 136 die Spannbacken 100 radial nach außen bewegt, wobei die Kontaktflächen 78 das Blechpaket 13 am Innendurchmesser kontaktieren und einspannen.

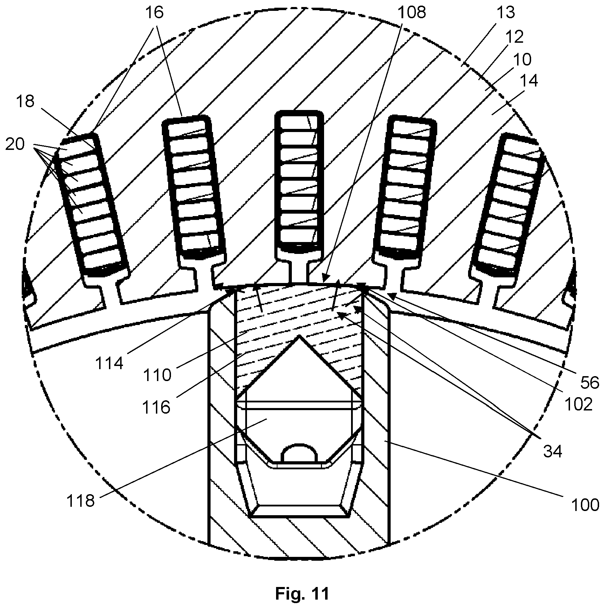

Wie insbesondere aus Fig. 11 ersichtlich ist der Kontaktflächennahbereich 114, der angrenzend an den Rand der Kontaktfläche 108 vorgesehen ist, vom Blechpaket weg geneigt oder gekrümmt ausgebildet. Der massive oder versiegelte Bereich der Spannbacke 100 berührt das Blechpaket 13 nicht.

Durch einen nicht dargestellten, aber aus der DE 10 2019 106 392 A1 hinreichend bekannten Drehantrieb lässt sich der Spanndorn 104 mit dem eingespannten Stator 12 in eine Drehbewegung versetzen, um in der Imprägniervorrichtung 24 eine Imprägnierung durchzuführen.

Im Folgenden wird auf die Fig. 13 bis 16 Bezug genommen, um die Imprägniervorrichtung 24 und das dadurch durchführbare Imprägnierverfahren näher zu erläutern. Die Imprägniervorrichtung 24 weist eine Harzauftragseinrichtung 26 zum Auftragen von Harz auf das zu imprägnierende Bauteil 10 auf. Die Harzauftragseinrichtung 26 kann unterschiedlich aufgebaut sein. Bevorzugt ist die Harzauftragseinrichtung 26 als Träufeleinrichtung 28 ausgebildet

Die Fig. 13 bis 16 zeigen eine Imprägnieranordnung 30, die das Bauteil 10 und die Imprägniervorrichtung 24 umfasst, von der hier nur die Harzauftragseinrichtung 26 und eine Spanneinheit 36 gezeigt sind. Dabei ist die Harzauftragseinrichtung 26 als Träufeleinrichtung 28 zum Aufträufeln eines zunächst noch flüssigen Harzes auf das Bauteil 10 ausgebildet. Vorzugsweise wird das Bauteil 10 dabei mittels einer Dreheinrichtung 29 um seine Längsmittelachse als Drehachse 38 gedreht. Das Harz von der Träufeleinrichtung 28 läuft dann durch Kapillarkräfte und durch Fliehkräfte und - bei Neigung der Drehachse des Bauteils 10 schräg zur Vertikalen auch durch Schwerkraft - in die verbleibenden Hohlräume in den Nuten 16 und füllt diese aus.

Anschließend wird das Harz durch Temperieren geliert und schließlich vollständig ausgehärtet.

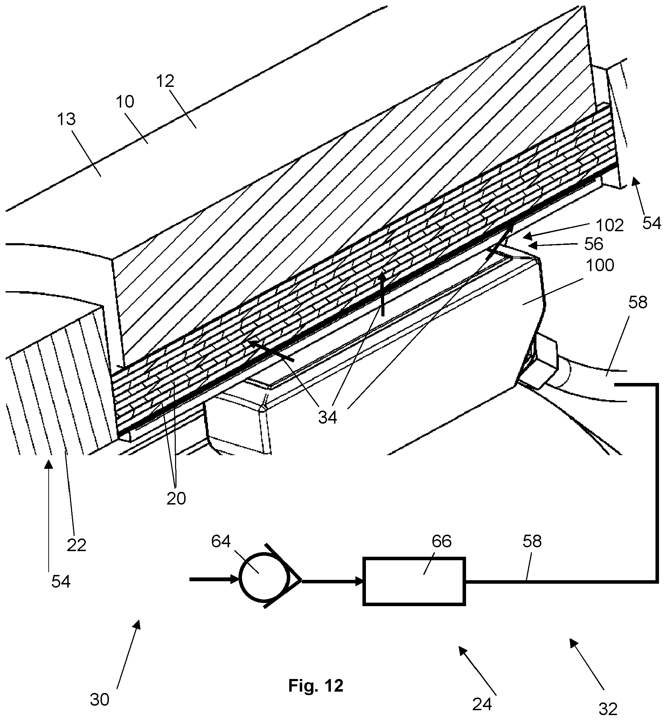

Wie in den Fig. 13 bis 16 und schematisch auch in Fig. 12 dargestellt, weist die Imprägniervorrichtung 24 zusätzlich zu der Harzauftragseinrichtung 26 noch die Spanneinheit 104 zum Halten des Bauteils 10 und eine Sperrgasströmungserzeugungseinrichtung 32 zur Erzeugung einer Sperrgasströmung 34 auf.

Im Folgenden werden Eigenschaften und Wirkungen der Sperrgasströmungserzeugungseinrichtung 32 anhand der Darstellungen der Fig. 1 bis 16 am Beispiel der Imprägnierung des Stators 12 eines Elektromotors als Bauteil 10 näher erläutert.

Der in den Fig. 5 bis 16 gezeigte Stator 12 weist als Gehäuse 14 ein Blechpaket 13 auf, welches aus vielen einzelnen Blechen besteht. Die Bleche werden zueinander ausgerichtet, gefügt und verschweißt. Durch die geometrische Form der einzelnen Bleche ergeben sich nach dem Fügen als axiale Längsnuten ausgebildete Nuten 16, die durch das Blechpaket 13 führen. In diese Nuten 16 wird Isolationspapier 18 eingebracht, welche die als Kupferdrähte/Kupferpins (im Folgenden Drähte 42 genannt; Beispiel für elektrische Leiter) ausgeführten Drahtabschnitte 20 im Blechpaket 13 umhüllen. Fig. 6, 7, 10, 11, 12 und 16 zeigen, wie die Kupferpins oder die Kupferdrähte durch die Nuten 16 im Blechpaket 13 verlaufen. Die Pins/Drähte sind vom Blechpaket 13 durch das Isolationspapier 18 getrennt.

Zwischen den einzelnen Kupferdrähten und -pins sowie dem Isolationspapier 18 entstehen kleine Lücken. Die Nuten 16 können nicht zu 100% gefüllt werden. Diese entstandenen Lücken werden mit einem Harz befüllt, das nach dem Aushärten bei einer bestimmten Temperatur die einzelnen Komponenten des Stators 12 in ihrer Position stabilisiert. Die Harzfüllung wirkt dem elektrischen Durchschlag einzelner Leiter entgegen, begünstigt die Wärmeableitung und verhindert Vibrationen bzw. Folgeschäden wie Abrasion der Isolationsschicht einzelner Pins und Drähte durch Vibrationen.

Zur Befüllung der Nuten 16 mit dem Harz gibt es verschiedene Verfahren. Bei bevorzugten Ausgestaltungen des hier dargestellten Imprägnierverfahrens geht es speziell um das sogenannte "Träufelverfahren", mit welchem das Harz in den Stator eingebracht wird. Die hier dargestellten Ideen hinsichtlich Konzentrierung eines Harzauftrages nur auf gewünschte Bereiche lassen sich aber auch auf andere Imprägnierverfahren anwenden.

Wie in Fig. 5 dargestellt, ist eine Mittelachse des Stators 12 vorzugsweise horizontal auf einer Drehachse 38 angeordnet, um die er sich dreht. Optional kann die Drehachse um eine bestimmte Gradzahl gekippt werden.

Die Träufeleinrichtung 28 weist eine oder mehrere Träufeldüsen 40 auf, die auf die Drähte 42 bzw. Pins, die aus den Nuten 16 des Blechpaketes 13 ragen, gerichtet sind. Mit den Träufeldüsen 40 wird das flüssige Harz auf die Drähte 42 bzw. Pins geträufelt, während sich der Stator 12 um seine Drehachse 38 dreht. Es ist anzumerken, dass der gesamte Stator 12 zuvor auf eine bestimmte Temperatur gebracht wurde. Dadurch wird auch das Harz niedrigviskos, also flüssiger und kann so über die Kapillarwirkung zwischen den Drähten 42 und Pins durch die Nuten 16 des Blechpaketes 13 laufen bzw. kriechen.

Nachdem die geplante Menge an Harz auf- bzw. eingebracht wurde, wird das Harz auf eine Geltemperatur gebracht. Die Geltemperatur ist vom Harz abhängig. Hier fängt das Harz an zu polymerisieren d.h. auszuhärten.

Solange das Harz noch nicht angefangen hat zu gelieren, wird der Stator 12 konstant um seine Drehachse 38 weitergedreht, um zu vermeiden, dass das Harz aus den Nuten 16 läuft. Das Harz wird nur durch die Fliehkräfte der Drehung, die Kapillarwirkung und die definierte Viskosität in Position gehalten.

Beim Träufeln fließt das Harz - begünstigt durch die Kapillarkräfte - in die Nut 16 und füllt dort die Zwischenräume aus. Das Harz wird in der Regel mit einer Temperatur von 10-45°C verarbeitet und trifft beim Träufeln auf einen ca. 80-140° heißen Stator 12. Dadurch ändert sich die Viskosität schlagartig auf einen Bruchteil der Viskosität, welche ursprünglich bei Raumtemperatur vorherrscht. Das Fließverhalten des Harzes nach dem Auftreffen gibt maßgeblich das Design des Stators vor, welches in der Regel von dem Hersteller des Stators 12 auch entsprechend des Einsatzzweckes vorgegeben wird. Im günstigsten Fall fließt das Harz zwischen Isolationspapier und Kupferlackdrähte - Drähte 42 - und füllt somit die Zwischenräume aus. Der Fließweg des Imprägnierharzes kann jedoch nicht zwangsläufig bestimmt werden, somit besteht die Tendenz, dass das Harz insbesondere durch die Ausprägung des Isolationspapiers an der Stirnseite der Statoren 12 auch zwischen Isolationspapier und Blechpaket 13 fließt.

Der Stator 12 ist beim z.B. durch Träufeln erfolgenden Harzauftrag auf den Spanndorn 128 der Spanneinheit 104 aufgespannt. Dieser Spanndorn 128 zentriert den Stator 12, insbesondere das Blechpaket 13, mit den Spannbacken 100 auf die Mittelachse des Blechpakets 13. Diese Spannbacken 100 berühren den Stator 12 am Innendurchmesser des Blechpakets 13 und sind die Schnittstelle von Spanndorn 128 zum Stator 12. Die Spannbacken 100 können in unterschiedlicher Form ausgeprägt werden. Diese werden jedoch in der Regel dem Innendurchmesser des Blechpakets 13 angepasst. Da eine gewisse Spannkraft benötigt wird, um den Stator 12 durch Kraftschluss beim Träufelprozess sowie beim Statortransport mit Spanndorn 128 zu halten, muss die Spannkraft auf eine Fläche verteilt werden. Bei einer zu kleinen Spannfläche ergeben sich Druckspitzen, welche das Blechpaket 13 des Stators 12 im elastischen oder plastischen Bereich verformen könnten.

Das Blechpaket 13 des Stators 12 ist wiederum aus einer Vielzahl von Blechlamellen mit einer Dicke von 0,1-0,4 mm gebildet. Diese Blechlamellen werden in einem Stanzprozess hergestellt, gestapelt und am Außendurchmesser miteinander verschweißt, siehe die entsprechenden Schweißnähte 48 in Fig. 1. Durch den Herstellungsprozess (insbesondere das Stapeln der Blechlamellen) und dessen Toleranzen ist der Innendurchmesser des Blechpakets 13 nicht eben. Durch einen leichten Versatz der einzelnen Blechlamellen entsteht eine unregelmäßige Oberfläche. Des Weiteren ist die Höhe des Blechpakets 13 an einer ersten Position 50, wo sich eine Schweißnaht 48 befindet, und einer zweiten Position 52, die zwischen benachbarten Schweißnähten 48 liegt, unterschiedlich: an den Schweißnähten - erste Position 50 - ist die Höhe jeweils kleiner als an den Zwischenpositionen - zweite Position 52. Dadurch, dass die Schweißnähte 48 am Außendurchmesser liegen, ist die Höhe des Blechpakets 13 am Innendurchmesser in der Regel größer als am Außendurchmesser, da die Fixierung außen erfolgt. Dadurch ergeben sich kleine Zwischenräume zwischen den Blechlamellen.

Des Weiteren ergeben sich ebenfalls Zwischenräume zwischen den Spannbacken 100 und dem Blechpaket 13. Diese Zwischenräume wirken als Kapillare, so dass das Harz in diese Kapillaren gezogen werden könnte.

Nach dem Träufelprozess, welcher unter konstanter Rotation um die Statorachse stattfindet, wird der Stator 12 weiter unter Temperatureinfluss unter konstanter Drehzahl gedreht. Während dem Gelieren bzw. Aushärten ist der Stator 12 weiterhin auf dem Spanndorn 44 aufgespannt. Das auf dem Stator 12 befindliche Harz wird dadurch geliert, d.h. die Polymerisation beginnt, bis dieses schließlich vollkommen ausgehärtet ist. Harz, das sich zwischen Spannbacke 46 und Blechpaket 13 befände, würde ebenfalls aushärten.

Wenn sich Harz zwischen Spannbacke 100 und Blechpaket 13 befindet und aushärtet, ergeben sich die folgenden Nachteile:
- Der Innendurchmesser des Blechpakets wird durch das ausgehärtete Harz verschmutzt.
- Am fertigen Stator ist in der Regel ein Innendurchmesser frei von Harz bzw. nur ein minimaler Harzauftrag erwünscht.
- Der Spanndorn 128 lässt sich durch das gelierte/ausgehärtete Harz nur schwer vom Blechpaket 13 lösen.
- Es bleiben Harzreste an den Spannbacken 100 sowie am Innendurchmesser des Blechpakets 13 zurück.
- Bei weiterer Verwendung des Spanndorns 128 baut sich immer mehr Harz an den Spannbacken 100 auf, was mit jedem zusätzlich geträufelten Stator 12 zu einem größeren Harzauftrag am Statorinnendurchmesser führt.

Um diese Nachteile zu vermeiden, werden bei der Imprägniervorrichtung 24 die Spannbacken 100 verwendet. Die Imprägniervorrichtung 24 ist zum Imprägnieren von Bauteilen 10 einer elektrischen Maschine in Serienproduktion ausgebildet, und umfasst die Harzauftragseinrichtung 26 zum Auftragen eines Harzes auf einen ersten Bereich 54 eines sich in der Imprägniervorrichtung 24 drehenden Bauteils 10 und die Sperrgasströmungserzeugungseinrichtung 32 zum Richten einer Sperrgasströmung 34 auf wenigstens einen sich an den ersten Bereich 54 anschließenden zweiten Bereich 56 des Bauteils 10, um ein Fließen des Harzes von dem ersten Bereich 54 zu dem oder über den zweiten Bereich 56 zu verhindern. Die Sperrgasströmung wird durch die Spannbacken 100, nämlich durch deren offenporige Fluiddurchlassbereiche 110 unmittelbar an oder neben der Kontaktfläche 108 gerichtet.

Als Sperrgas kommt vorzugsweise - weil einfach zu realisieren und kostengünstig - Luft zum Einsatz; je nach gewünschter Atmosphäre können auch andere Gase eingesetzt werden.

Ein möglicher Prinzipaufbau einer Ausführungsformen der Sperrgasströmungserzeugungseinrichtung 32 wird im Folgenden anhand der Fig. 12 erläutert. Die Sperrgasströmungserzeugungseinrichtung weist wenigstens eine Sperrgasleitung 58 und die Spannbacke 100 mit dem Fluiddurchlassbereich 110 auf. Vorteilhafte Ausgestaltungen der Sperrgasströmungserzeugungseinrichtung 32 weisen weiter wenigstens eine Druckgasquelle 64 und/oder eine Temperiereinrichtung 66 auf.

Die Druckgasquelle 64 ist zum Beispiel als Pumpe oder Druckgastank ausgebildet und dient dazu, ein Gas, insbesondere Luft, mit einem relativ zu einem Umgebungsdruck an dem ersten Bereich 54 um 0,05 bis 4 Bar, vorzugsweise 0,05 bis 1 Bar, insbesondere 0,1 bis 0,2 Bar erhöhten Druck über die Sperrgasleitung 58 an die wenigstens eine Spannbacke 100 zu liefern.

Die Temperiereinrichtung 66 weist z.B. einen Wärmetauscher, eine Heizeinrichtung und/oder eine Kühleinrichtung auf und ist zur Temperaturbeeinflussung des die Sperrgasströmung 34 erzeugenden Gases, insbesondere Luft, ausgebildet.

Von der optional vorgesehenen Temperiereinrichtung 66 führt die in Fig. 12 nur schematisch dargestellte Sperrgasleitung 58 über den Sperrfluidanschluss 140 in den Spanndorn 128 und wird dort verzweigt, und die einzelnen Zweige der Sperrgasleitung 58 sind an die Sperrfluideinlässe der einzelnen Spannbacken 100 angeschlossen.

Somit lässt sich Sperrfluid durch sehr kleine Poren unmittelbar an oder neben der Kontaktfläche 108 leiten, so dass eine Verschmutzung der Spannbacken 100 durch das z.B. als Harz ausgebildete Arbeitsfluid auch aufgrund bei einem Ansaugen durch Kapillarkräfte wirksam vermeidbar ist.

Die weiteren Schritte zum Aushärten des Harzes werden so durchgeführt, wie dies im Einzelnen in der DE 10 2019 106 392 A1 beschrieben und gezeigt ist.

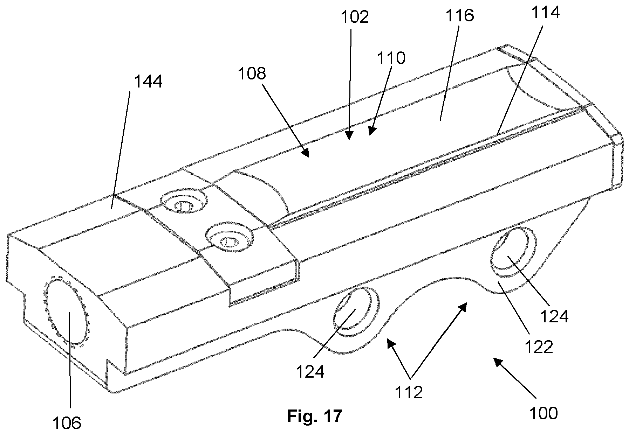

In Fig. 17 ist noch eine Variante der Spannbacke 100 gezeigt. Auch hier ist der Fluiddurchlassbereich 110 durch das offenporige Material 116 gebildet, an dem die Kontaktfläche 108 und bei der gezeigten Ausgestaltung auch der Kontaktflächennahbereich 110 ausgebildet ist. Das offenporige Material 116 ist durch ein separates Spannbackengehäuse 144 eingehaust, um a.) negative Luftströmungen auf den Träufelprozess zu minimieren und b) um den Luftbedarf zu minimieren. Das offenporige Material 116 kann wie zuvor beschrieben durch 3D-Druck oder auch einen offenporigen Metallschaum gebildet werden. Das Spannbackengehäuse 144 kann separat hergestellt sein und einteilig oder mehrteilig ausgebildet sein. Ansonsten kann die Spannbacke 100 dieser Variante wie die zuvor erläuterte Spannbacke ausgebildet sein, so dass auf die obige Beschreibung verwiesen wird.

Einige interessante Aspekte der oben erläuterten Ausführungsformen werden im Folgenden noch einmal zusammengefasst. Um eine selektive Bearbeitung eines Werkstücks mittels eines Arbeitsfluids in Serienproduktion derart zu verbessern, dass Nachbearbeitungen oder Reinigungsarbeiten von Werkzeugen nach der Bearbeitung minimiert werden, ist somit eine Spannbacke (100) zur Bearbeitung des Werkstücks mittels des Arbeitsfluids unter Richten einer Sperrfluidströmung auf einen von Arbeitsfluid frei zu haltenden Kontaktbereich (102) zwischen Spannbacke (100) und Werkstück vorgeschlagen worden, wobei die Spannbacke (100) einen Sperrfluideinlass (106) zum Einleiten von Sperrfluid und eine Kontaktfläche (108) zum Kontaktieren des Werkstücks beim Einspannen aufweist, wobei ein die Kontaktfläche (108) und/oder einen der Kontaktfläche (108) benachbarten Kontaktflächennahbereich (110) bildender Fluiddurchlassbereich (110) der Spannbacke (100) durch ein offenporiges Material (116) mit einer fluidpermeablen offenporigen Struktur gebildet ist, wobei die Spannbacke (100) dazu ausgebildet ist, das durch den Sperrfluideinlass (106) eingeleitete Sperrfluid durch das offenporige Material (116) hindurch hin auf den von Arbeitsfluid frei zu haltenden Kontaktbereich (102) zu richten, wobei die durchschnittliche Porengröße des offenporigen Materials (116) kleiner als 0,5 mm ist.

### Bezugszeichenliste:

- 10: Bauteil
- 12: Stator
- 13: Blechpaket
- 14: Gehäuse
- 16: Nut
- 18: Isolationspapier
- 20: Drahtabschnitte
- 22: Spulenwicklung
- 24: Imprägniervorrichtung
- 26: Harzauftragseinrichtung
- 28: Träufeleinrichtung
- 29: Dreheinrichtung
- 30: Imprägnieranordnung
- 32: Sperrgasströmungserzeugungseinrichtung
- 34: Sperrgasströmung
- 38: Drehachse
- 40: Träufeldüse
- 42: Drähte
- 48: Schweißnaht
- 50: erste Position
- 52: zweite Position
- 54: erster Bereich
- 56: zweiter Bereich
- 58: Sperrgasleitung
- 64: Druckgasquelle
- 66: Temperiereinrichtung
- 100: Spannbacke
- 102: Kontaktbereich
- 104: Spanneinheit
- 106: Sperrfluideinlass
- 108: Kontaktfläche
- 110: Fluiddurchlassbereich
- 112: Befestigungsbereich
- 114: Kontaktflächennahbereich
- 116: offenporiges Material (Material mit einer offenporigen Struktur)
- 118: Hohlraum
- 120: Spannbackenbewegungsmechanismus
- 122: Flansch
- 124: Befestigungsöse
- 126: Spannbackenkörper
- 128: Spanndorn
- 130: Dornkörper
- 132: erste Spanndornwechselschnittstelle
- 134: zweite Spanndornwechselschnittstelle
- 136: Handhabungsorgan
- 138: Umlenkgetriebe
- 140: Sperrfluidanschluss
- 142: Sperrfluid
- 144: Spannbackengehäuse

## Patentansprüche

1. Spannbacke (100) für eine Spanneinheit (104) zur Bearbeitung eines Werkstücks mittels eines Arbeitsfluids unter Richten einer Sperrfluidströmung auf einen von Arbeitsfluid frei zu haltenden Kontaktbereich (102) zwischen Spannbacke (100) und Werkstück, wobei die Spanneinheit (104) dazu ausgebildet ist, mit mehreren relativ zueinander beweglichen Spannbacken (100) das Werkstück zur Bearbeitung einzuspannen, wobei die Spannbacke (100) einen Sperrfluideinlass (106) zum Einleiten von Sperrfluid und eine Kontaktfläche (108) zum Kontaktieren des Werkstücks beim Einspannen aufweist, wobei ein die Kontaktfläche (108) und/oder einen der Kontaktfläche (108) benachbarten Kontaktflächennahbereich (110) bildender Fluiddurchlassbereich (110) der Spannbacke (100) eine Schicht oder einen Körper aus einem offenporigen Material (116) mit einer fluidpermeablen offenporigen Struktur aufweist, wobei die Spannbacke (100) dazu ausgebildet ist, das durch den Sperrfluideinlass (106) eingeleitete Sperrfluid durch das offenporige Material (116) hindurch hin auf den von Arbeitsfluid frei zu haltenden Kontaktbereich (102) zu richten, wobei die durchschnittliche Porengröße des offenporigen Materials (116) kleiner als 0,5 mm ist.

2. Spannbacke (100) nach Anspruch 1,
**gekennzeichnet durch** wenigstens eines der folgenden Merkmale,
2.1 dass die Spannbacke (100) lediglich im Fluiddurchlassbereich (110) mit der offenporigen Struktur ausgebildet ist und ansonsten geschlossen, versiegelt und/oder massiv und/oder ohne Poren ausgebildet ist,
2.2 dass die Spannbacke (100) ganz aus offenporigem Material (116) gebildet ist, das außerhalb des Fluiddurchlassbereichs (110) für Fluid undurchlässig versiegelt ist,
2.3 dass die Spannbacke (100) im Wesentlichen aus einem homogenen einstückigen Spannbackenkörper (126) besteht, der ganz oder bereichsweise mit der offenporigen Struktur ausgebildet ist,
2.4 dass die Spannbacke (100) komplett aus Metall gebildet ist, oder
2.5 dass keine zusätzlichen Bindemittel, Bindeschichten oder innere Grenzflächen vorgesehen sind.

3. Spannbacke (100) nach einem der voranstehenden Ansprüche, **dadurch gekennzeichnet, dass** das offenporige Material (116)
3.1 ein Metallmaterial ist,
3.2 Poren mit einer durchschnittlichen Porengröße kleiner 250 µm aufweist,
3.3 Durchgangskanäle mit einem durchschnittlichen Durchmesser kleiner 0,5 mm, vorzugsweise kleiner 250 µm, aufweist,
3.4 durch 3D-Druck hergestellt ist und/oder
3.5 eine offenporige Waben- oder Stützstruktur aufweist.

4. Spanneinheit (104) zum Einspannen eines Werkstücks zwecks Bearbeitung des Werkstücks mittels eines Arbeitsfluids unter Richten einer Sperrfluidströmung auf einen von Arbeitsfluid frei zu haltenden Kontaktbereich (102) zwischen Spanneinheit (104) und Werkstück, umfassend mehrere der Spannbacken (100) nach einem der voranstehenden Ansprüche und einen Spannbackenbewegungsmechanismus (120) zur Relativbewegung der Spannbacken (100).

5. Imprägniervorrichtung (24) zum Imprägnieren von Statoren (12) von elektrischen Maschinen in Serienproduktion unter Richten einer Sperrfluidströmung auf einen von Imprägnier-Harz frei zu haltenden Kontaktbereich (102), in dem der Stator (12) zum Einspannen kontaktiert wird, umfassend eine Spanneinheit (104) mit wenigstens einer Spannbacke (100) nach einem der Ansprüche 1 bis 3 oder eine Spanneinheit (104) nach Anspruch 4 sowie eine Sperrfluidversorgung zum Versorgen der wenigstens einen Spannbacke (100) mit dem Sperrfluid.

6. Imprägniervorrichtung (24) nach Anspruch 5, **gekennzeichnet durch** eine Dreheinrichtung (29) zum Drehen der Spanneinheit (104), um den daran eingespannten Stator (12) um seine Mittelachse zu drehen.

7. Imprägniervorrichtung (24) nach einem der Ansprüche 5 oder 6, **dadurch gekennzeichnet, dass** die Sperrfluidversorgung eine Druckgasquelle (64) zum Liefern eines unter Druck stehenden Gases als Sperrfluid aufweist.

8. Imprägniervorrichtung (24) nach einem der Ansprüche 5 bis 7, **gekennzeichnet durch** wenigstens eines oder mehrere der folgenden Merkmale:
8.1 eine Harzauftragseinrichtung (26) zum Auftragen des Harzes auf einen zu imprägnierenden Bereich (54) eines sich in der Imprägniervorrichtung (24) drehenden Stators (12),
8.2 dass die Harzauftragseinrichtung (26) wenigstens eine zwischen einer Betriebsstellung und einer Ruhestellung bewegbare Träufeldüse (40) zum Aufträufeln von Harz auf den zu imprägnierenden Bereich (54) des Stators (13) aufweist,
8.3 eine Druckgasquelle (64) zum Liefern eines Gases als Sperrfluid mit einem relativ zu einem Umgebungsdruck um 0,05 bis 4 Bar, vorzugsweise 0,05 bis 1 Bar, insbesondere 0,1 bis 0,2 Bar erhöhten Druck;
8.4 eine Temperiereinrichtung (66) zur steuerbaren Temperaturbeeinflussung des Sperrfluids.

9. Imprägnieranordnung (30) mit einer Imprägniervorrichtung (24) nach einem der voranstehenden Ansprüche und einem zu imprägnierenden Bauteil (10) zum Bilden eines Stators (12) einer elektrischen Maschine, wobei das Bauteil (10) ein ringförmiges Blechpaket (13) mit Nuten (16) aufweist, in denen elektrische Leiter (20, 42) eingesetzt sind, die aus Nutöffnungen hervorstehen, wobei die Imprägniervorrichtung (24) zum Auftrag von Imprägniermittel auf einen die Nutöffnungen aufweisenden oder an die Nutöffnungen angrenzenden Ringbereich ausgebildet ist und wobei der von Imprägniermittel frei zu haltende Kontaktbereich (102) an einem Innenbereich des Blechpakets (13) angeordnet ist.

10. Herstellverfahren zum Herstellen einer Spannbacke (100) nach einem der Ansprüche 1 bis 3, umfassend 3D-Drucken wenigstens eines den Fluiddurchlassbereich (110) aufweisenden Spannbackenkörpers (126).

11. Herstellverfahren nach Anspruch 10, **dadurch gekennzeichnet,**
**dass** die gesamte Spannbacke (100) einstückig mittels 3D-Metalldruck hergestellt wird, wobei der Fluiddurchlassbereich (110) offenporig ist und weitere Oberflächenbereiche der Spannbacke (100) fluiddicht gedruckt oder beschichtet oder verkleidet werden.

12. Imprägnierverfahren zur Imprägnierung eines Stators (12), umfassend Verwendung der Imprägniervorrichtung nach einem der Ansprüche 5 bis 7.

13. Imprägnierverfahren nach Anspruch 12 zum Imprägnieren eines Stators (12) einer elektrischen Maschine in Serienproduktion, umfassend:
0) Einspannen des Stators (12) durch Auseinanderbewegen der Spannbacken (100), bis die Kontaktflächen (108) der Spannbacken (100) an einem inneren Bereich eines Blechpakets (13) des Stators (12) anliegen,
a) Auftragen von Harz auf einen zu imprägnierenden Bereich (54) des Stators (12) und
b) Richten einer Sperrgasströmung (34) durch das Material des Fluiddurchlassbereichs (110) mit der offenporigen Struktur hindurch auf den inneren Bereich (56) des Blechpakets (13), um die Kontaktflächen (108) frei von Harz zu halten.

14. Imprägnierverfahren nach Anspruch 13,
**dadurch gekennzeichnet,**
**dass** Schritt a) wenigstens einen oder mehrere der folgenden Schritte umfasst:
a1) Drehen des ringförmigen Stators (12) während des Auftragens um eine Drehachse (38);
a2) Aufträufeln des Harzes mittels wenigstens einer Träufeldüse (40);
a3) Temperieren des Harzes vor dem Auftragen auf eine vorbestimmte Temperatur;
a4) Temperieren des Blechpakets (13) vor und/oder während des Auftragens auf eine vorbestimmte Temperatur;
a5) Bewegen einer Träufeldüse (40) zu einer Betriebsstellung zum Aufräufeln und in eine Ruhestellung zum Aufnehmen eines neuen Stators und Entfernen eines bereits beträufelten Stators,
a6) drehendes Antreiben der Spanneinheit (104), um das Blechpaket um seine Mittelachse während des Harzauftrags zu drehen.

15. Imprägnierverfahren nach einem der Ansprüche 12 bis 13,
**gekennzeichnet durch** wenigstens einen oder mehrere der Schritte:
c) Gelieren des Harzes unter Drehbewegung des mittels der Spanneinheit (104) eingespannten Stators (12), bis eine Viskosität des Harzes erreicht ist, die ein Auslaufen von Harz verhindert, wobei bei einer Übergabe zwischen einer Harzauftragsstation zur Durchführung der Schritte a) und b) und einer Gelierstation zur Durchführung des Schritts c) eine Sperrfluidzufuhr unterbrochen sein kann,
d) endgültiges Aushärten des Harzes in einem Ofen.

## Claims

1. Clamping jaw (100) for a clamping unit (104) for processing a workpiece by means of a working fluid while directing a barrier fluid flow to a contact region (102) between the clamping jaw (100) and the workpiece, which contact region (102) is to be kept free of working fluid, the clamping unit (104) being adapted to clamp the workpiece for machining with a plurality of clamping jaws (100) movable relative to one another, the clamping jaw (100) having a barrier fluid inlet (106) for introducing barrier fluid, and a contact surface (108) for contacting the workpiece during clamping, wherein a fluid passage region (110) of the clamping jaw (100) forming the contact surface (108) and/or a contact surface proximal region (110) adjacent to the contact surface (108) comprises a layer or body of an open-pored material (116) having a fluid-permeable open-pored structure, wherein the clamping jaw (100) is adapted to direct the barrier fluid introduced through the barrier fluid inlet (106) through the open-porous material (116) toward the contact region (102) to be kept free of working fluid, wherein the average pore size of the open-pored material (116) is smaller than 0.5 mm.

2. Clamping jaw (100) according to claim 1,
**characterized by** at least one of the following features:
2.1 that the clamping jaw (100) is formed with the open-pored structure only in the fluid passage region (110) and is otherwise closed, sealed and/or solid and/or formed without pores,
2.2 that the clamping jaw (100) is formed entirely of open-pored material (116) which is sealed outside the fluid passage region (110) so as to be impermeable to fluid,
2.3 that the clamping jaw (100) consists essentially of a homogeneous one-piece clamping jaw body (126) which is formed entirely or in regions with the open-pored structure,
2.4 that the clamping jaw (100) is formed entirely of metal, or
2.5 that no additional bonding agents, bonding layers or internal interfaces are provided.

3. Clamping jaw (100) according to any one of the preceding claims, **characterized in that** the open-pored material (116) is
3.1 a metal material,
3.2 has pores with an average pore size smaller than 250 µm,
3.3 has through channels with an average diameter smaller than 0.5 mm, preferably smaller than 250 µm,
3.4 is produced by 3D printing, and/or
3.5 has an open-pored honeycomb or support structure.

4. Clamping unit (104) for clamping a workpiece for processing the workpiece by means of a working fluid while directing a barrier fluid flow to a contact region (102) between the clamping jaw (100) and the workpiece, which contact region (102) is to be kept free of working fluid, the clamping unit (104) comprising a plurality of the clamping jaws (100) according to any one of the preceding claims and a clamping jaw moving mechanism (120) for relatively moving the clamping jaws (100).

5. Impregnating device (24) for impregnating stators (12) of mass-produced electric machines while directing a flow of barrier fluid to a contact area (102) to be kept free of impregnating resin, in which the stator (12) is contacted for clamping, comprising a clamping unit (104) having at least one clamping jaw (100) according to any one of claims 1 to 3 or a clamping unit (104) according to claim 4, and a barrier fluid supply for supplying the at least one clamping jaw (100) with the barrier fluid.

6. Impregnating device (24) according to claim 5, **characterized by** a rotating device (29) for rotating the clamping unit (104) to rotate the stator (12) clamped thereto about its center axis.

7. Impregnating device (24) according to any one of claims 5 or 6, **characterized in that** the barrier fluid supply comprises a pressurized gas source (64) for supplying a pressurized gas as barrier fluid.

8. Impregnating device (24) according to any one of claims 5 to 7, **characterized by** at least one or more of the following features:
8.1 a resin application means (26) for applying the resin to a region (54) to be impregnated of a stator (12) rotating in the impregnation device (24),
8.2 that the resin application device (26) has at least one drip nozzle (40), which can be moved between an operating position and a rest position, for dripping resin onto the region (54) of the stator (13) which is to be impregnated,
8.3 a pressurized gas source (64) for supplying a gas as a barrier fluid with a pressure increased relative to an ambient pressure by 0.05 to 4 bar, preferably 0.05 to 1 bar, in particular 0.1 to 0.2 bar;
8.4 a temperature control device (66) for controllably influencing the temperature of the barrier fluid.

9. Impregnating arrangement (30) with an impregnating device (24) according to any one of the preceding claims and a component (10) to be impregnated to form a stator (12) of an electric machine, the component (10) having an annular laminated core (13) with grooves (16) in which electrical conductors (20, 42) are inserted which project from groove openings, wherein the impregnating device (24) is adapted to apply impregnating agent to an annular region having the groove openings or adjoining the groove openings, and wherein the contact region (102) to be kept free of impregnating agent is arranged on an inner region of the laminated core (13).

10. Manufacturing method for manufacturing a clamping jaw (100) according to any one of claims 1 to 3, comprising 3D printing of at least one clamping jaw body (126) having the fluid passage region (110).

11. Manufacturing method according to claim 10, **characterized in that** the entire clamping jaw (100) is manufactured in one piece by means of 3D metal printing, the fluid passage region (110) being open-pored and further surface regions of the clamping jaw (100) being printed or coated or cladded in a fluid-tight manner.

12. Impregnation process for impregnating a stator (12), comprising using the impregnation device according to any one of claims 5 to 7.

13. Impregnation process according to claim 12 for impregnating a stator (12) of an electrical machine in series production, comprising:
0) clamping the stator (12) by moving the clamping jaws (100) apart until the contact surfaces (108) of the clamping jaws (100) abut an inner region of a laminated core (13) of the stator (12),
a) applying resin to a region (54) to be impregnated of the stator (12), and
b) directing a barrier gas flow (34) through the material of the fluid passage region (110) having the open-pored structure onto the inner region (56) of the laminated core (13) to maintain the contact surfaces (108) free of resin.

14. Impregnation process according to claim 13, **characterized in that** step a) comprises at least one or more of the following steps:
a1) rotating the annular stator (12) about an axis of rotation (38) during application;
a2) applying the resin by dripping by means of at least one drip nozzle (40);
a3) tempering the resin to a predetermined temperature before application;
a4) tempering the laminated core (13) to a predetermined temperature before and/or during application;
a5) moving a drip nozzle (40) to an operating position for drip application and to a rest position for receiving a new stator and removing a previously drip-coated stator,
a6) rotationally driving the clamping unit (104) to rotate the laminated core about its central axis during resin application.

15. Impregnation process according to any of claims 12 to 13, **characterized by** at least one or more of the steps:
c) gelling the resin while rotating the stator (12) clamped by means of the clamping unit (104) until a viscosity of the resin is reached that prevents resin leakage, wherein a barrier fluid supply may be interrupted during a transfer between a resin application station for performing steps a) and b) and a gelling station for performing step c),
d) final curing of the resin in an oven.

## Revendications

1. Mâchoire de serrage (100) pour une unité de serrage (104) pour l'usinage d'une pièce à usiner au moyen d'un fluide de travail en dirigeant un écoulement de fluide barrière sur une zone de contact (102) à maintenir exempte de fluide de travail entre la mâchoire de serrage (100) et la pièce à usiner, l'unité de serrage (104) étant conçue pour serrer la pièce à usiner pour l'usinage avec plusieurs mâchoires de serrage (100) mobiles les unes par rapport aux autres, la mâchoire de serrage (100) présentant une entrée de fluide barrière (106) pour l'introduction de fluide barrière et une surface de contact (108) pour le contact avec la pièce à usiner lors du serrage, une zone de passage de fluide (110) de la mâchoire de serrage (100) formant la surface de contact (108) et/ou une zone proche de la surface de contact (110) voisine de la surface de contact (108) présentant une couche ou un corps en un matériau à pores ouverts (116) avec une structure à pores ouverts perméable au fluide, la mâchoire de serrage (100) étant conçue pour diriger le fluide barrière introduit par l'entrée de fluide barrière (106) à travers le matériau à pores ouverts (116) vers la zone de contact (102) à maintenir exempte de fluide de travail, la taille moyenne des pores du matériau à pores ouverts (116) étant inférieure à 0,5 mm.

2. Mâchoire de serrage (100) selon la revendication 1,
**caractérisée par** au moins une des caractéristiques suivantes,
2.1 que la mâchoire de serrage (100) est réalisée avec la structure à pores ouverts uniquement dans la zone de passage du fluide (110) et qu'elle est fermée, scellée et/ou massive et/ou sans pores pour le reste,
2.2 que la mâchoire de serrage (100) est entièrement formée d'un matériau à pores ouverts (116) qui est scellé de manière imperméable au fluide en dehors de la zone de passage du fluide (110),
2.3 que la mâchoire de serrage (100) est essentiellement constituée d'un corps de mâchoire de serrage (126) homogène d'une seule pièce, qui est formé entièrement ou par zones avec la structure à pores ouverts,
2.4 que la mâchoire de serrage (100) est entièrement formée de métal, ou
2.5 qu'aucun liant, couche de liaison ou interface interne supplémentaire n'est prévu.

3. Mâchoire de serrage (100) selon l'une quelconque des revendications précédentes, **caractérisée en ce que** le matériau à pores ouverts (116)
3.1 est un matériau métallique,
3.2 présente des pores d'une taille moyenne inférieure à 250 µm,
3.3 présente des canaux de passage avec un diamètre moyen inférieur à 0,5 mm, de préférence inférieur à 250 µm,
3.4 est fabriqué par impression 3D et/ou
3.5 présente une structure alvéolaire ou de support à pores ouverts.

4. Unité de serrage (104) pour serrer une pièce à usiner en vue de l'usinage de la pièce à usiner au moyen d'un fluide de travail en dirigeant un flux de fluide barrière sur une zone de contact (102) à maintenir exempte de fluide de travail entre l'unité de serrage (104) et la pièce à usiner, comprenant plusieurs des mâchoires de serrage (100) selon l'une des revendications précédentes et un mécanisme de déplacement des mâchoires de serrage (120) pour le déplacement relatif des mâchoires de serrage (100).

5. Dispositif d'imprégnation (24) pour imprégner des stators (12) de machines électriques produits en série en dirigeant un flux de fluide barrière sur une zone de contact (102) à maintenir exempte de résine d'imprégnation, dans lequel le stator (12) est mis en contact pour le serrage, comprenant une unité de serrage (104) avec au moins une mâchoire de serrage (100) selon l'une des revendications 1 à 3 ou une unité de serrage (104) selon la revendication 4 ainsi qu'une alimentation en fluide barrière pour alimenter ladite au moins une mâchoire de serrage (100) avec le fluide barrière.

6. Dispositif d'imprégnation (24) selon la revendication 5, **caractérisé par** un dispositif de rotation (29) pour faire tourner l'unité de serrage (104) afin de faire tourner le stator (12) serré sur celle-ci autour de son axe central.

7. Dispositif d'imprégnation (24) selon l'une des revendications 5 ou 6, **caractérisé en ce que** l'alimentation en fluide barrière comprend une source de gaz comprimé (64) pour fournir un gaz sous pression comme fluide barrière.

8. Dispositif d'imprégnation (24) selon l'une des revendications 5 à 7, **caractérisé par** au moins une ou plusieurs des caractéristiques suivantes:
8.1 un dispositif d'application de résine (26) pour appliquer la résine sur une zone à imprégner (54) d'un stator (12) en rotation dans le dispositif d'imprégnation (24), 8.2 que le dispositif d'application de résine (26) présente au moins une buse d'instillation (40) mobile entre une position de fonctionnement et une position de repos pour l'instillation de résine sur la zone à imprégner (54) du stator (13),
8.3 une source de gaz comprimé (64) pour fournir un gaz comme fluide barrière avec une pression augmentée de 0,05 à 4 bars, de préférence de 0,05 à 1 bar, en particulier de 0,1 à 0,2 bar, par rapport à une pression ambiante;
8.4 un dispositif de régulation de la température (66) pour influencer de manière contrôlable la température du fluide barrière.

9. Agencement d'imprégnation (30) avec un dispositif d'imprégnation (24) selon l'un des revendications précédentes (12) et avec un composant à imprégner (10) pour former un stator (12) d'une machine électrique, le composant (10) présentant un paquet de tôles (13) annulaire avec des rainures (16) dans lesquelles sont insérés des conducteurs électriques (20, 42) qui dépassent des ouvertures de rainure, le dispositif d'imprégnation (24) étant conçu pour appliquer un agent d'imprégnation sur une zone annulaire présentant les ouvertures de rainure ou adjacente aux ouvertures de rainure, et la zone de contact (102) à maintenir exempte d'agent d'imprégnation étant disposée sur une zone intérieure du paquet de tôles (13).

10. Procédé de fabrication d'une mâchoire de serrage (100) selon l'une des revendications 1 à 3, comprenant l'impression 3D d'au moins un corps de mâchoire (126) présentant la zone de passage de fluide (110).

11. Procédé de fabrication selon la revendication 10, **caractérisé en ce que** l'ensemble de la mâchoire de serrage (100) est fabriqué d'une seule pièce par impression métallique 3D, la zone de passage de fluide (110) étant à pores ouverts et d'autres zones de surface de la mâchoire de serrage (100) étant imprimées ou revêtues ou habillées de manière étanche aux fluides.

12. Procédé d'imprégnation pour imprégner un stator (12), comprenant l'utilisation du dispositif d'imprégnation selon l'une quelconque des revendications 5 à 7.

13. Procédé d'imprégnation selon la revendication 12, pour l'imprégnation d'un stator (12) de machine électrique en série, comprenant:
0) le serrage du stator (12) par écartement des mâchoires (100) jusqu'à ce que les surfaces de contact (108) des mâchoires (100) soient en contact avec une zone interne d'un paquet de tôles (13) du stator (12),
a) application de résine sur une zone à imprégner (54) du stator (12) et
b) diriger un flux de gaz de blocage (34) à travers le matériau de la zone de passage de fluide (110) ayant la structure à pores ouverts vers la zone intérieure (56) du paquet de tôles (13) afin de maintenir les surfaces de contact (108) exemptes de résine.

14. Procédé d'imprégnation selon la revendication 13, **caractérisé en ce que** l'étape a) comprend au moins une ou plusieurs des étapes suivantes:
a1) faire tourner le stator annulaire (12) autour d'un axe de rotation (38) pendant l'application;
a2) instillation de la résine au moyen d'au moins une buse d'instillation (40);
a3) tempérer la résine à une température prédéterminée avant l'application;
a4) tempérer le paquet de tôles (13) à une température prédéterminée avant et/ou pendant l'application;
a5) déplacement d'une buse d'instillation (40) vers une position de fonctionnement pour l'instillation et vers une position de repos pour la réception d'un nouveau stator et l'enlèvement d'un stator déjà instillé,
a6) l'entraînement en rotation de l'unité de serrage (104) pour faire tourner le paquet de tôles autour de son axe central pendant l'application de la résine.

15. Procédé d'imprégnation selon l'une des revendications 12 à 13, **caractérisé par** au moins une ou plusieurs des étapes suivantes:
c) gélification de la résine avec mouvement de rotation du stator (12) serré au moyen de l'unité de serrage (104), jusqu'à ce qu'une viscosité de la résine soit atteinte, qui empêche un écoulement de la résine, une alimentation en fluide barrière pouvant être interrompue lors d'un transfert entre un poste d'application de résine pour l'exécution des étapes a) et b) et un poste de gélification pour l'exécution de l'étape c),
d) durcissement final de la résine dans un four.
